# FASCICULE DE BREVET EUROPEEN

(11) **EP 3 063 941 B1**
(45) Date de publication et mention de la délivrance du brevet: **03.06.2020**
(21) Numéro de dépôt: 14781597.1
(22) Date de dépôt: 09.10.2014
(51) Int. Cl.: H04N 21/4623, H04N 21/266, H04N 21/4627, H04N 21/254, H04N 21/24

(54) **METHODE ET DISPOSITIF DE DISTRIBUTION DE LICENCES MULTIMEDIAS AU SEIN D'UN SYSTÈME DE DISTRIBUTION D'UN SERVICE MULTIMEDIA SECURISE**
METHODE UND VORRICHTUNG ZUR VERTEILUNG VON MULTIMEDIALIZENZEN IM RAHMEN EINES VERTEILUNGSSYSTEMS EINES GESICHERTEN MULTIMEDIADIENSTES
METHOD AND APPARATUS FOR DISTRIBUTING MEDIA LICENSES WITHIN A DISTRIBUTION SYSTEM OF A SECURE MULTIMEDIA SERVICE

(30) Priorité: 01.11.2013 EP 13191240
(43) Date de publication de la demande: 07.09.2016
(73) Titulaire: Nagravision S.A., 1033 Cheseaux-sur-Lausanne (CH)
(72) Inventeur: LUGEON, Blaise, 1316 Chevilly (CH); BIEBER, Yann, 1004 Lausanne (CH)
(74) Mandataire: Vigand, Philippe
(86) Numéro de dépôt international: PCT/EP2014/071672
(87) Numéro de publication internationale: WO 2015/062836

(56) Documents cités:
- EP-A1- 2 175 652
- US-A1- 2013 121 489

## Description

### DOMAINE TECHNIQUE

La présente invention est du domaine de la gestion des droits numériques (en anglais Digital Rights Management, abrégé DRM) et trouve une application dans la diffusion de services multimédias tels que la télévision à péage (pay-TV). Un tel service est typiquement diffusé via un signal de type broadcast, multicast ou unicast, par exemple conforme à la norme DVB (Digital Video Broadcasting), ou est rendu accessible via un autre moyen de communication tel que le réseau Internet, selon un protocole de type IP, en particulier IPTV (Internet Protocol Television).

La gestion des droits numériques s'applique à tout service dont l'accès est restreint à certains utilisateurs, en particulier aux utilisateurs ayant acquis les droits nécessaires pour bénéficier de ce service. Dans l'environnement de la télévision à péage, lequel concerne de préférence la présente invention, ce service est matérialisé par un contenu, tel qu'une émission, un débat, un événement sportif, une série cinématographique ou un film. L'utilisateur peut bénéficier de l'accès à ce contenu s'il est compté parmi les ayants droit. Etant de nature généralement payante, l'accès à ces services est sécurisé, par exemple par une opération de chiffrement qui va brouiller le contenu du service en le rendant inintelligible, ou par un mot de passe faisant office de barrière derrière laquelle peut se trouver le contenu du service sous une forme non brouillée. Dans les deux cas, l'accès en clair à ce contenu peut être octroyé à tout utilisateur qui en fait la demande par la délivrance d'une licence qui permet à cet utilisateur d'acquérir les droits (clés cryptographiques, mot de passe et/ou autres droits d'accès) nécessaires au déchiffrement ou au déverrouillage du contenu protégé.

Ces licences peuvent être basées sur le principe de l'abonnement ou de l'achat unitaire. Elles peuvent donc respectivement porter sur une longue durée (par ex. licence de type mensuelle ou annuelle) ou peuvent être délivrées pour une courte période, typiquement pour la durée d'un événement ponctuel. La présente invention vise à résoudre une problématique survenant dans ce dernier cas de figure. Elle concerne donc la délivrance de licences, à savoir de droits ou de moyens permettant à l'utilisateur d'accéder à un contenu chiffré, qui couvrent plus particulièrement un événement ponctuel de type paiement à la séance, plus connu sous l'appellation anglophone « Pay-Per-View » (PPV).

Dans un système de télévision numérique à péage diffusé par exemple selon la norme DVB, le service multimédia, en particulier le contenu multimédia (événements cinématographiques, sportifs, divertissements, informations, débats, etc...) se trouve sous la forme d'un flux numérique. Ce dernier est transmis depuis un serveur, head-end ou centre de gestion, vers des récepteurs ou des dispositifs utilisateurs adaptés à recevoir et à traiter un tel flux. Typiquement, de telles unités de réceptions peuvent être des décodeurs (Set-Top-Box), des ordinateurs, des tablettes informatiques, des téléphones intelligents (smartphones) etc.... Ce flux est encrypté (c.-à.-d. chiffré) afin de pouvoir contrôler son utilisation et définir des conditions nécessaires à son usage. Cette encryption est réalisée grâce à des mots de contrôle (Control Words CW) qui sont changés à intervalle régulier (typiquement entre 1 et 30 secondes) afin de dissuader tout pirate de vouloir chercher à retrouver un tel mot de contrôle pour pouvoir déchiffrer le flux.

Pour que le dispositif utilisateur puisse déchiffrer le flux encrypté par ces mots de contrôle, ces derniers lui sont envoyés parallèlement dans des messages de contrôle (ECM), eux mêmes chiffrés par une clé dite de transmission. Cette dernière est propre au système de transmission (ou système de distribution) établi entre le serveur et le dispositif utilisateur, plus précisément entre le serveur et un module de sécurité du dispositif utilisateur. En effet, du coté de l'utilisateur les opérations de sécurité sont généralement effectuées dans un module de sécurité associé à l'unité multimédia, c'est-à-dire au récepteur/décodeur de l'utilisateur. Un tel module de sécurité peut être réalisé en particulier selon quatre formes distinctes. L'une d'elles est une carte à microprocesseur, une carte à puce, ou plus généralement un module électronique (ayant une forme de clé, de badge,...). Un tel module est généralement amovible, connectable au récepteur et réputé inviolable. La forme avec contacts électriques est la plus utilisée, mais n'exclu pas une liaison sans contact, par exemple de type ISO 15443.

Une deuxième forme connue est celle d'un boîtier de circuit intégré placé, généralement de façon définitive et inamovible, dans le boîtier du récepteur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle.

Bien que le niveau de sécurité diffère entre ces cas, la fonction est quant à elle identique de sorte qu'on parlera de module de sécurité quelle que soit la manière de réaliser ce module. Dans les quatre formes décrites ci-dessus, le module de sécurité a des moyens d'exécution d'un programme (CPU) stocké dans sa mémoire. Ce programme permet d'effectuer les opérations de sécurité, vérifier les droits, effectuer des déchiffrements, activer un module pour y effectuer des opérations cryptographiques, etc.

Un message de contrôle (ECM) ne contient pas uniquement le mot de contrôle (CW) mais également les conditions pour que ce mot soit renvoyé par le module de sécurité au récepteur/décodeur de l'utilisateur. Lors du déchiffrement des mots de contrôle, l'unité de sécurité vérifie tout d'abord si un droit associé aux conditions d'accès énoncées dans le message de contrôle (ECM) est présent dans l'unité de sécurité. Cette opération a donc pour but de contrôler que le droit d'accès au flux considéré est bien présent chez l'utilisateur. Le mot de contrôle (CW) n'est retourné au décodeur que lorsque la comparaison donne une réponse positive.

Pour que le droit d'accès soit présent dans l'unité de sécurité, il doit être chargé par un message de gestion de droit (EMM) qui, pour des raisons de sécurité, est généralement encrypté par une clé différente, dite clé de droit (RK).

Dans la suite de l'exposé décrivant notamment les unités impliquées dans un système de distribution d'un service multimédia d'accès sécurisé, on parlera de dispositif utilisateur comme étant l'ensemble comprenant l'unité de sécurité et le récepteur/décodeur de l'utilisateur. Aussi, on parlera simplement de serveur comme étant une entité pouvant englober plusieurs entités généralement distinctes. Parmi ces entités, on mentionnera notamment un centre de diffusion d'un contenu multimédia ou un centre donnant accès à ce contenu ou à un service multimédia, une autorité ou un centre de gestion des droits (y.c. clés, licences, authentifications, etc...) alloués aux utilisateurs et un centre d'encryption du contenu ou de son accès.

Dans le cas par exemple d'un système de télévision numérique à péage diffusé selon un protocole IPTV, on ne parlera pas spécifiquement de messages ECMs, EMMs ni même de mots de contrôle CWs. Cependant, il n'en demeure pas moins que le service multimédia reste protégé contre un libre accès, par exemple par chiffrement du contenu multimédia. En requérant une licence, le dispositif utilisateur peut obtenir les moyens nécessaires pour avoir accès à ce contenu. Il existe différents modèles d'obtention de licences, parmi lesquels on mentionnera les modèles connus sous l'appellation anglophone de « Post-delivery » (On-Demand Delivery) et de « Pre-Delivery ». Dans le premier cas, le contenu est tout d'abord téléchargé ou introduit dans le dispositif utilisateur et la licence est délivrée dès l'instant où le contenu doit être joué, à savoir sur requête du dispositif utilisateur si ce dernier ne possède pas encore les clés nécessaires au déchiffrement de ce contenu. Le second cas, est plus adapté au scénario proposant une diffusion d'un contenu en direct (Live Streaming). Ce contenu est transmis aux dispositifs utilisateurs qui possèdent déjà une licence souscrite pour ce contenu.

Que la diffusion s'opère suivant un protocole IP (en particulier IPTV) selon l'un ou l'autre de ces modèles ou qu'elle soit faite suivant un autre standard de diffusion tel que DVB, ATSC (Advanced Television Systems Committee) ou le standard japonais ISDB (Integrated Services Digital Broadcasting), elle peut engendrer un problème survenant plus particulièrement lors de la diffusion d'événements ponctuels à forte audience. En effet, lors de la diffusion d'une compétition sportive, d'un débat télévisé ou par exemple d'un film très attendu, un grand nombre d'utilisateurs souhaitent soudainement acquérir une licence nécessaire au déchiffrement du contenu protégé. Ce pic de demandes intervient généralement peu avant le début de la diffusion de l'événement en question.

Si la diffusion du contenu chiffré, la connexion d'un grand nombre d'utilisateurs ou le transport de messages de contrôle incluant droits, clés ou licences, n'engendrent pas de réels problèmes de performance au niveau du serveur, il n'en va pas de même pour ce qui est de la création des licences, en particulier de licences personnelles dédiées chacune à un seul dispositif utilisateur. En effet, la génération d'une licence personnelle nécessite à elle seule un certain nombre d'opérations cryptographiques. Dans le cas où de telles licences doivent être délivrées à un grand nombre de dispositifs utilisateurs, la répétition de ces opérations requière, dans l'ensemble, d'importantes ressources informatiques particulièrement gourmandes en termes de puissance de calcul. Or, ces opérations doivent être supportées par le serveur du fait qu'il constitue, dans un tel système de diffusion, l'organe qui délivre et gère les licences attribuées aux utilisateurs.

Ces licences sont spécifiques et uniques, à savoir qu'elles sont toutes différentes les unes des autres et que chaque utilisateur possède une licence personnelle qui est associée uniquement au matériel (décodeur) de cet utilisateur. Par ce moyen, on évite que des licences puissent être partagées avec d'autres utilisateurs non autorisés.

Tant que les ressources informatiques (ressources CPU) du serveur ne sont pas entièrement utilisées, la génération des licences selon ce schéma ne cause aucun problème. En revanche, si la demande de licences est si forte qu'elle surpasse la puissance de calcul du serveur, ce dernier ne sera plus à même de répondre à temps à cette demande. Par conséquent, une partie des utilisateurs ne recevront que tardivement leur licence et seront donc privé de l'accès (en clair) au contenu tant que la situation ne se sera pas normalisée.

Pour résoudre ce problème, un moyen pourrait consister à prévoir au serveur des ressources de calcul surdimensionnées ou à multiplier les serveurs disponibles. Cependant, une telle solution serait certainement mal adaptée pour répondre à des problèmes occasionnels, du fait qu'elle serait coûteuse et nécessiterait de modifier les installations actuelles en remplaçant une majeur partie du matériel existant par du matériel plus performant. Une autre solution consisterait à bénéficier d'une puissance de calcul fournie par un ensemble de matériel informatique raccordé en réseau (plus connu sous l'appellation anglophone de cloud computing). Cependant, le partage d'informations sensibles (requises lors de la création de licences personnelles) entre une pluralité de centres indépendants engendre d'autres problèmes, par exemple des problèmes de sécurité.

Par ailleurs, si dans le cas de figure d'une diffusion de type DVB le serveur peut, de sa propre initiative, envoyer en tout temps des messages aux dispositifs utilisateurs, il n'en va généralement pas de même dans le cas d'une diffusion selon le protocole IP. Selon ce protocole et à l'exception de services IP particuliers tels que des services de messagerie instantanée, seul le dispositif utilisateur peut prendre l'initiative de contacter un serveur pour échanger des messages. Si dans un intervalle de temps relativement restreint, le dispositif utilisateur n'a pas obtenu de réponse de la part du serveur interrogé, alors la session (connexion) qui avait été ouverte par le dispositif utilisateur pour transmettre la requête est automatiquement fermée par ce dernier. Or, dans le cas où le serveur n'a plus les ressources de calcul nécessaires pour pouvoir transmettre les licences régulières en réponses à certaines requêtes émanant de dispositifs utilisateurs, alors ces derniers fermeront automatiquement leur session au terme d'un délai d'attente relativement court imposé par le protocole. La distribution de licences dans un environnement de type IP engendre donc une seconde problématique qui est celle de communiquer à chaque dispositif utilisateur resté sans réponse du serveur, l'instant à partir duquel ce serveur devrait être à même de satisfaire la requête provenant du dispositif utilisateur en lui transmettant la licence régulière demandée.

De l'art antérieur connu, le document US2013/121489 décrit un système dans lequel plusieurs techniques sont mises en oeuvre pour gérer la charge d'un/de serveur(s) face à un afflux de demandes de licences. Aussi, le document EP2175652 décrit un système pour stabiliser le fonctionnement d'un serveur de licences en évitant de concentrer les demandes d'acquisition de licences d'un grand nombre de clients à la fois, notamment juste après le début de la diffusion d'un contenu.

### BREVE DESCRIPTION DE L'INVENTION

La présente invention vise à remédier au moins en partie aux problèmes précités en proposant une solution avantageuse qui, sans impliquer de modifications significatives au serveur, permet à tous les dispositifs utilisateurs requérant une licence d'y avoir instantanément droit à n'importe quel moment. Cette solution est particulièrement avantageuse pour faire face à de fortes concentrations de demandes de licences (pics de demandes) survenant occasionnellement et durant un intervalle de temps relativement court, principalement pour des services de type Pay-Per-View, voire de type Video-On-Demand (VOD).

Pour ce faire, l'invention suggère une méthode et un dispositif de distribution de licences multimédias tels que définis par les revendications annexées.

Ainsi, Au lieu de ne délivrer que des licences uniques et personnelles (dénommées ci-après licences régulières), la présente invention suggère, durant une période de trop forte demande, l'octroi d'au moins une licence singulière (ou globale) partagée entre au moins une partie des utilisateurs qui ne peuvent pas immédiatement se voir attribuer une licence régulière. A la différence de la licence régulière, la licence singulière n'est pas spécifique et propre à chaque utilisateur mais est commune à une pluralité d'utilisateurs, par exemple à tous les utilisateurs qui ne peuvent pas obtenir de licence régulière en réponse à leur requête ou à une partie de ces utilisateurs.

Cette licence est singulière à double titre: d'une part elle peut être simplifiée et/ou commune à une pluralité d'utilisateurs, et d'autre part elle est transitoire car elle n'est utilisable qu'à court terme (de préférence à très court terme) durant une période de transition. La durée de cette période sera limitée au temps nécessaire au serveur pour pouvoir absorber le pic de demandes de licences et ainsi être à nouveau à même de fournir directement une licence régulière à toutes les requêtes provenant des dispositifs utilisateurs.

Avantageusement, en recourant à l'utilisation d'une licence singulière dans une telle méthode, il devient possible d'épargner les ressources informatiques du serveur en réduisant la puissance de calcul requise pour satisfaire la demande de licences, notamment en cas de pics de requêtes provenant de dispositifs utilisateurs. En effet, dans un premier mode de réalisation, la licence singulière pourrait être une licence simplifiée qui demanderait sensiblement moins de ressources de calcul pour être générée en regard d'une licence régulière. Une telle licence pourrait être obtenue par un algorithme simplifié moins gourmand en ressources informatiques. Le nombre de licences singulières pourrait dans ce cas être identique au nombre de licences régulières à transmettre. Ceci constituerait une première mesure pour accélérer la cadence (débit) de production des licences tout en conservant un niveau de sécurité intéressant, compte tenu du fait que la licence singulière n'est utilisée que pour une période transitoire.

Dans un autre mode de réalisation, la licence singulière peut être une licence partagée entre une pluralité de dispositifs utilisateurs. Elle peut être partagée par un groupe de dispositifs utilisateurs en attente d'une licence régulière. Si, par exemple, ce groupe comporte quelques 10'000 dispositifs, le calcul d'une seule licence singulière suffirait à remplacer 10'000 fois la même opération. En variante, une seule licence singulière pourrait être calculée pour tous les dispositifs utilisateurs qui, par manque de puissance du serveur, seraient en attente de recevoir leur licence régulière. L'avantage d'une telle licence singulière réside donc dans le fait qu'elle est calculée une seule fois pour un grand nombre d'utilisateurs, voire pour tous les utilisateurs n'ayant pas pu recevoir à temps leur licence régulière. Par ce moyen, les ressources de calcul du serveur peuvent être soulagées et ce dernier sera à même de répondre immédiatement à toutes les requêtes émanant des utilisateurs en leur octroyant, soit une licence régulière, dans la limite des ressources de calcul possibles du serveur, soit une licence singulière si cette limite est outrepassée par une trop forte concentration de demandes.

Selon un mode de réalisation préféré, le basculement du mode singulier au mode régulier est temporisé, de manière à ce que ce basculement s'effectue avec un temps de retard suffisant pour permettre aux dispositifs utilisateurs d'accéder encore momentanément au contenu par le biais de la licence singulière jusqu'à recevoir et être à même d'utiliser leur licence régulière.

D'autres avantages et modes de réalisation seront également présentés dans la description détaillée qui va suivre.

### BREVE DESCRIPTION DES FIGURES

L'invention sera mieux comprise grâce aux dessins schématiques annexés, donnés à titre d'exemples nullement limitatifs et dans lesquels:
La figure 1 présente une vue d'ensemble d'un système de distribution de licences et de services multimédias dans lequel la méthode de la présente invention peut être mise en oeuvre.
La figure 2 est une illustration des principales étapes de la méthode de l'invention qui a été schématisée sous la forme d'un organigramme.
La figure 3a est un exemple de représentation graphique illustrant, en fonction du temps, le nombre de requêtes reçues par le serveur de la part de dispositifs utilisateurs demandant chacun de recevoir une licence régulière.
La figure 3b est un graphique qui, en correspondance avec celui de la figure 3a et sur la même base de temps, représente le nombre de licences régulières et singulières qui doivent être délivrées par le serveur pour répondre aux requêtes illustrées dans la figure 3a.
La figure 4a donne, en correspondance avec les figures 3a, 3b et en fonction de la même base de temps, une illustration graphique du nombre de licences singulières délivrées par le serveur,
La figure 4b donne, en correspondance au graphique de la figure 4a, la probabilité qu'ont les dispositifs utilisateurs d'obtenir une licence régulière en réponse à leur requête durant un intervalle de temps englobant les pics de demandes illustrés à la figure 3a.

### EXPOSE DE L'INVENTION

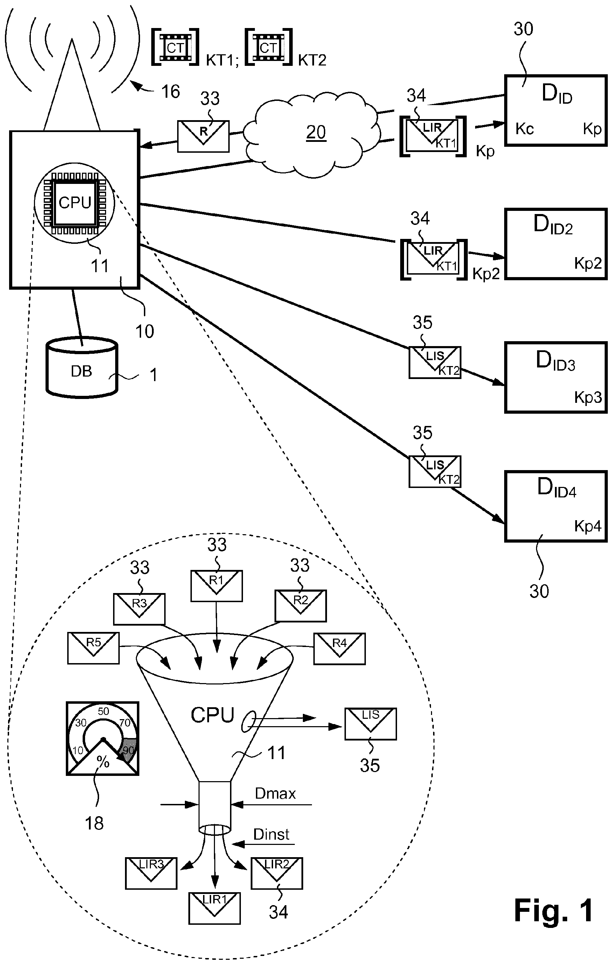

En référence à la figure 1, celle-ci représente, d'une façon très schématique, un système de distribution de licences et de services multimédias permettant la mise en oeuvre de la méthode de la présente invention. Dans la suite du présent exposé, on parlera plus généralement de contenu multimédia CT comme étant un des services multimédias possibles proposés par le système de distribution. Ce contenu multimédia CT est illustré dans cette figure sous la forme d'une portion de pellicule cinématographique. De manière simplifiée, le système de distribution intègre principalement un serveur 10 relié, par un moyen de transmission 20, à une pluralité de dispositifs utilisateurs 30. Quatre dispositifs utilisateurs 30 ont été représentés de manière non limitative sur la figure 1. Par soucis de simplification, seule les principales différences entre le premier dispositif utilisateur (D_{ID}) et chacun des trois autres dispositifs utilisateurs (D_{ID2}, D_{ID3}, D_{ID4}) ont été représentés pour ces trois derniers dispositifs. Chaque dispositif utilisateur est repérable par un identifiant unique ID qui lui est propre et qui est donc différent des autres identifiants. De manière générique, le premier dispositif utilisateur est identifiable par son identifiant ID, le second dispositif utilisateur porte l'identifiant ID2, le troisième ID3 et ainsi de suite.

Schématisé par une seule entité, le serveur 10 peut néanmoins comprendre plusieurs entités distinctes telles qu'un centre de diffusion (broadcaster, head-end) ou d'accès à un contenu multimédia, une autorité ou un centre de gestion des droits (alloués aux utilisateurs / abonnés / souscripteurs), un centre de chiffrement et/ou un centre de gestion des clés cryptographiques relatives au chiffrement des données (contenus, mots de contrôle, messages de contrôle ou message de gestion), voire encore d'autres unités ou sous unités gérant par exemple l'authentification des données.

Le contenu CT peut être issu d'un fournisseur de contenu multimédia ou d'une base de données 1 qui peut être externe au serveur 10 (par exemple localisée chez un fournisseur de contenu CT) ou être interne au serveur 10. Ce contenu CT peut être typiquement transmis sous la forme d'un flux de transport de données, par exemple un flux de type MPEG permettant le multiplexage de flux audio/vidéo et de flux de description de programmes et de services.

Le moyen de transmission 20 peut être constitué d'une transmission filaire ou d'une communication sans fil mise en oeuvre par une unité de transmission 16. Il peut s'agir par exemple d'une transmission satellitaire ou terrestre par voie hertzienne, d'une transmission par câble, de type IP (réseau Internet) ou de type téléphonique, etc...

Le dispositif récepteur 30 peut être un constitué de tout type d'appareil capable de recevoir le contenu multimédia du serveur 10 par l'intermédiaire du moyen de transmission 20. Ainsi, le dispositif récepteur 30 pourra être un ordinateur, une tablette informatique, un téléphone ou autre appareil dit intelligent ou encore de préférence un récepteur/décodeur de type Set-Top-Box (STB) qui peut en outre être couplé à un appareil capable d'effectuer le rendu du contenu multimédia comme par exemple un moniteur, une télévision, un dispositif audio ou tout autre équipement multimédia tel qu'une console de jeux.

L'accès au contenu multimédia CT est protégé par une première protection KT1 conformément à un mode de distribution dit régulier, mis en oeuvre par le serveur. De préférence, la première protection KT1 correspond à une première clé de transmission générée par le serveur. Le contenu ainsi protégé est noté [CT]_{KT1} dans les figures annexées. Par cette notation, on comprendra que c'est l'accès au contenu CT qui est protégé. Dans un mode de réalisation possible, le contenu pourrait être directement chiffré par la première clé de transmission KT1 mais, de préférence, cette dernière est utilisée communément pour chiffrer un mot de contrôle CW, plus précisément au moins un mot de contrôle CW. Ce dernier correspond alors à la clé qui permet de déchiffrer le contenu CT encrypté. Le cryptogramme, noté [CW]_{KT1} et constitué du mot de contrôle CW chiffré par la première clé de transmission KT1, est typiquement transmis dans le flux de transport de données issu du serveur 10, parallèlement au contenu chiffré et plus particulièrement au sein d'un premier message de contrôle ECM1 de sorte qu'on pourrait adopter la notation suivante : ECM1=[CW]_{KT1}.

Le serveur 10 est doté de ressources de calcul 11 qui sont schématisées dans la figure 1 par un microprocesseur (CPU). Ces ressources sont dédiées essentiellement, voire exclusivement, à la génération de licences en réponses à des requêtes 33 émanant des dispositifs utilisateurs 30. Dans le mode de distribution régulier, ces licences sont exclusivement des licences dites régulières, notées LIR et repérée par le numéro de référence 34. Chaque licence régulière LIR comprend la première protection KT1 dont l'accès est sécurisé par une protection spécifique (personnelle) Kp qui est associée à chaque dispositif utilisateur et qui est différente pour chacun de ces dispositifs. La protection spécifique Kp est typiquement une clé personnelle appartenant à un seul dispositif utilisateur, raison pour laquelle dans la figure 1, la clé notée Kp2 est associée au dispositif utilisateur repéré par l'identifiant ID2, la clé notée Kp3 à celui portant l'identifiant ID3, et ainsi de suite. Dans un schéma de cryptographie asymétrique, la clé personnelle Kp pourrait être la clé publique propre au dispositif utilisateur en question. Dans un schéma de cryptographie symétrique, cette clé personnelle Kp (clé privée) ne serait connue que du serveur et du dispositif utilisateur concerné. L'accès à la licence régulière LIR peut être protégé en chiffrant la licence régulière avec Kp ou en chiffrant le contenu de cette licence régulière, à savoir la première protection KT1, au moyen de la protection personnelle Kp.

La partie inférieure de la figure 1 illustre, sous la forme d'un entonnoir schématique, la capacité des ressources de calcul 11 du serveur 10. Ce dernier peut accepter un grand nombre de requêtes 33 en provenance des dispositifs utilisateurs 30. Chaque requête 33 est représentée dans cette figure par une enveloppe identifiée (R1, R2, R3, R4, etc...) qui permet de connaître l'identifiant du dispositif utilisateur qui l'a émise. A titre d'exemple, la requête R2 serait celle émise par le dispositif utilisateur 30 portant l'identifiant ID2. Comme la création des licences régulières LIR requière d'importante ressources de calcul, il peut arriver que le serveur ne soit plus à même de répondre instantanément à toutes les requêtes 33 qu'il reçoit de la part des dispositifs utilisateurs. Cela est schématisé par la forme d'entonnoir donnée au CPU, dont le débit de sortie est limité par un certain diamètre qui n'autorise qu'un débit maximum Dmax. Ce débit ou cadence maximale de production de licences régulières est, soit physiquement défini par les ressources de calcul du serveur, soit défini par le concepteur ou le gestionnaire du système qui, volontairement, veut allouer au serveur une certaine puissance de calcul maximale de son choix, par exemple pour préserver une part des ressources qui seraient réservées à d'autres activités.

La cadence instantanée (notée Dinst sur la figure 1 en référence au débit instantané des licences régulières produites par le serveur) va donc dépendre du nombre de requêtes 33 que le serveur devra traiter. Cette cadence instantanée peut donc varier d'une valeur inférieure nulle à une valeur supérieure limite qui correspond à la cadence maximale Dmax. Dans ce rapport, la cadence instantanée Dinst peut être vue comme étant une valeur proportionnelle aux ressources de calcul utilisées par le serveur. Le taux d'utilisation des ressources de calcul par le serveur est schématisé dans la figure 1 par l'aiguille d'une unité de mesure 18 gradué ici en pourcent.

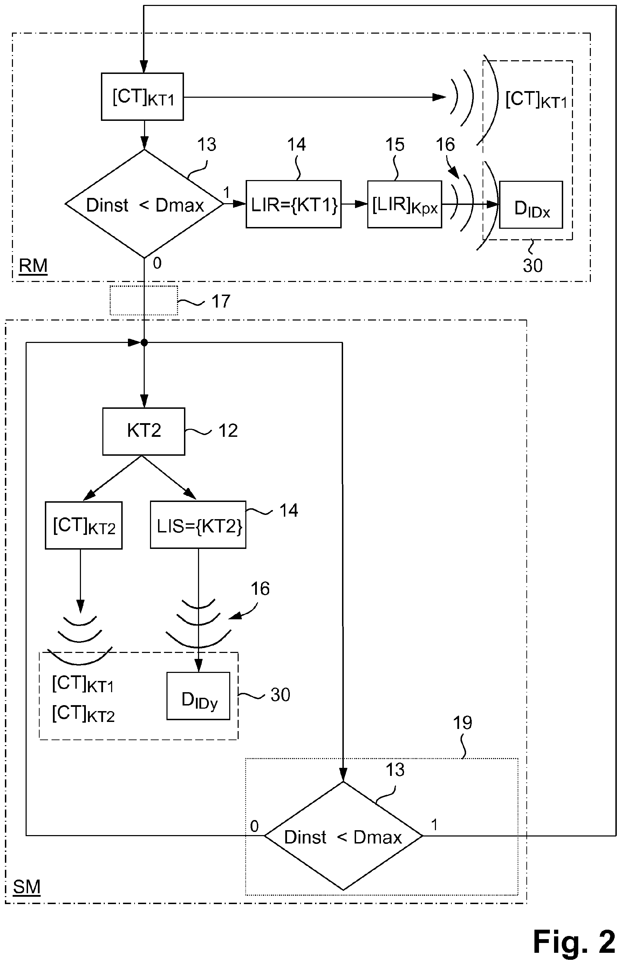

Les principales étapes de la méthode, constituant le premier objet de la présente invention, sont décrites ci-après; principalement en référence à l'organigramme illustré à la figure 2. Cette dernière est partagée en deux zones générales, chacune délimitée par un trait mixte. La première de ces zones correspond aux étapes réalisées dans le mode de distribution régulier (RM) mis en oeuvre par le serveur. La seconde zone correspond aux étapes réalisées lors du mode de distribution singulier (SM) dans lequel le serveur 10 peut basculer pour faire face à un pic de demandes (requêtes 33) de la part des dispositifs utilisateurs 30.

Au sommet de cet organigramme, on retrouve le contenu CT d'accès protégé par la première protection KT1. Ce contenu protégé [CT]_{KT1} est diffusé, par l'intermédiaire du moyen de transmission 20, à chaque dispositif utilisateur 30 dont l'environnement est délimité sur cette figure par un trait interrompu.

Les étapes de cette méthode sont circulaires, de sorte qu'elles peuvent être répétées sans fin. La première étape consiste à vérifier, par une unité logique 13, si la cadence instantanée (ou débit instantané) est inférieure à la cadence maximale. En d'autres termes, cela revient à vérifier que les ressources de calcul 11 utilisées par le serveur à un instant T présent (Dinst) n'excèdent pas un seuil maximum (Dmax). Dans l'affirmative, le serveur est à même de répondre immédiatement à toutes les requêtes 33 émises par les dispositifs utilisateurs 30. Il génère donc, par le biais d'un générateur de licences 14, une licence régulière LIR en réponse à chaque requête. Comme illustré sur la figure 2, la licence régulière LIR comprend la première protection KT1 qui, typiquement, peut être la première clé de transmission. Une unité de protection 15 protège ensuite l'accès à la première protection KT1 par une protection personnelle Kp qui est spécifique et propre au dispositif utilisateur concerné. Sur la figure 2, la protection spécifique associée au dispositif utilisateur D_{IDX} est notée Kpx. Ainsi protégée au sein de licence régulière LIR, la première protection KT1 est ensuite transmise par le biais de cette dernière au dispositif utilisateur concerné D_{IDx} par une unité de transmission 16. Pour ce faire, la licence régulière LIR peut être incorporée dans un message de contrôle, par exemple un EMM selon le standard DVB, ou être véhiculée au sein d'un autre message ou par l'intermédiaire d'une donnée équivalente, selon un autre standard tel que le standard IPTV.

Dans la négative, à savoir dans le cas où la cadence instantanée n'est pas inférieure à la cadence maximale, le serveur se trouve dans un état saturé. Dans cet état, la totalité de ses ressources de calcul 11 sont utilisées pour générer des licences régulières LIR en réponses aux requêtes des dispositifs utilisateurs. Par conséquent, le serveur n'a plus de disponibilité ou de ressources pour calculer davantage de licences régulières et ne sera donc plus à même de répondre immédiatement aux requêtes supplémentaires émanant des dispositif utilisateurs. Pour cette raison, une unité de sélection 17 fait basculer le serveur dans un mode de distribution dit singulier (SM), par exemple en activant une routine qui permet d'entreprendre des étapes spécifiques au mode de distribution singulier. Ce mode de distribution est singulier dans le sens où il permet de distribuer autant de licences multimédias (LIR / LIS) que nécessaire grâce à une réduction substantielle des ressources de calcul nécessaires pour générer la licence singulière et/ou grâce au partage d'une licence singulière entre plusieurs dispositifs utilisateurs.

Dans ce mode singulier, le serveur va protéger l'accès au contenu multimédia CT par au moins une seconde protection KT2 supplémentaire (c'est à-dire en plus de la première protection). Tout comme KT1, cette seconde protection est générée par une unité de sécurité 12. Selon le mode de réalisation préféré, l'accès à ce contenu va être protégé à la fois par KT1 et KT2. Cependant et dans tous les cas, la seconde protection KT2 est indépendante de la première protection KT1 de manière à ce que le l'accès au contenu CT puisse être garanti indifféremment par le biais de la première protection KT1 ou de la seconde protection KT2. Dans un mode de réalisation possible, le contenu CT pourrait être également chiffré par la seconde clé de transmission KT2 mais, de préférence, cette dernière est utilisée communément pour chiffrer le ou les mots de contrôle CW. Conformément au standard DVB, le ou les mots de contrôle (CW) vont chacun être chiffré, de façon indépendante, une fois par KT1 et une fois par KT2. On obtiendra par exemple ECM1=[CW]_{KT1}, et ECM2=[CW]_{KT2} qui peuvent être des messages diffusés ensemble, par exemple parallèlement l'un à l'autre ou l'un directement derrière l'autre. Les différents ECMs (ou EMMs) peuvent, par exemple, être identifiés par les dispositifs récepteurs au moyen de l'en-tête (non chiffrée) de ces messages de contrôle. En variante, on pourrait également considérer que ECM1 corresponde à une première portion d'un message ECM et qu'ECM2 corresponde à une seconde portion de ce même message ECM. Ce cas de figure pourrait être désigné par la notation ECM={[CW]_{KT1}; [CW]_{KT2}}.

Le serveur va également générer, par le biais du générateur de licences 14, au moins une licence dite singulière LIS, repérée par le numéro de référence 35. Cette licence singulière comprend la seconde protection KT2 et est représenté dans la figure 2 par la notation LIS={KT2}. Il va ensuite transmettre cette licence singulière LIS à au moins une partie des dispositifs utilisateurs 30, lesquelles par manque de ressources de calcul 11 du serveur, ne peuvent pas obtenir immédiatement une licence régulière. Sur la figure 1, la transmission de cette licence singulière est représentée comme étant issue d'un trop-plein dans l'entonnoir qui schématise le processeur CPU. Comme pour la licence régulière, la transmission de cette licence singulière peut se faire au moyen d'un message de contrôle, en particulier un message EMM, par exemple un second message EMM2 dédié spécifiquement au transport de cette licence et distinct du premier message EMM1 contenant la licence régulière. La transmission de la licence singulière LIS peut se faire selon différents modes. Dans un premier mode, on pourrait avoir recours à une connexion de type point-à-point (unicast). Selon un autre mode, pourrait opter pour une diffusion multipoint, à savoir à un groupe de dispositifs utilisateurs (multicast), alors que dans un dernier mode, on pourrait préférer une diffusion touchant tous les dispositifs utilisateurs (diffusion de type broadcast). Comme illustré sur la figure 2, le dispositif utilisateur qui n'a pas pu se voir attribuer de licence régulière LIR reçoit, dans son environnement (illustré par le trait interrompu), la licence singulière ainsi que le double accès protégé au contenu [CT]_{KT1}, [CT]_{KT2}. La réception de ces donnée n'est toutefois pas limitée aux dispositifs utilisateurs n'ayant pas reçu de licence régulière, cependant les dispositifs qui ont déjà une telle licence régulière sont volontairement écartés de la description du mode de distribution singulier du fait qu'ils ne sont plus concernés par la réception d'une licence singulière.

Avantageusement, le mode de distribution singulier permet de servir un grand nombre de dispositifs utilisateurs en leur distribuant une même licence singulière LIS, à savoir une licence identique pour l'ensemble de ces dispositifs. Par conséquent, le serveur pourrait se contenter de calculer et générer une seule licence singulière qui, momentanément, serait partagée par un grand nombre de dispositifs utilisateurs. Cette manière de faire permet au serveur de répondre immédiatement à toutes les requêtes 33 malgré ses ressources de calcul limitées. Dans des modes de réalisation plus élaborés, on verra également que le mode de distribution singulier permettra en outre de contrôler la répartition de requêtes subséquentes (secondes requêtes 33) en les échelonnant dans le temps. Les étapes de ces modes de réalisation plus élaborés sont illustrées dans la figure 2 par l'élément graphique 19 pouvant être matérialisé par une unité décisionnelle. Cette unité décisionnelle peut inclure l'unité logique 13 (comme représenté à la figure 2) mais pourrait également être également être disposée en sortie de l'unité logique, plus précisément sur la voie de l'issue positive de cette unité logique 13.

Dans le mode de distribution singulier, le serveur va également vérifier, de manière répétitive, si la cadence instantanée Dinst est inférieure à la cadence maximale Dmax. Cette vérification peut s'effectuer séquentiellement par rapport aux étapes précédentes ou s'opérer de préférence parallèlement à ces étapes, comme illustré dans la figure 2. Dans le cas où cette vérification donne une issue positive, le serveur va retourner dans son mode régulier pour n'autoriser l'accès au contenu multimédia CT qu'à l'aide d'une licence régulière LIR. En l'occurrence et selon le mode de réalisation préféré, le serveur protégera l'accès au contenu multimédia CT qu'à l'aide de la première protection KT1. Ce cas de figure correspond à une nouvelle disponibilité du serveur à générer des licences régulières LIR pour de nouvelles requêtes 33 et se traduit par un taux d'occupation de ses ressources de calcul 11 qui redescend en dessous du seuil maximal défini par la valeur correspondant au débit Dmax. A ce stade, il n'y a plus de raison de maintenir la double protection de l'accès au contenu par KT1 et KT2 de sorte que le contenu multimédia verra son accès à nouveau protégé uniquement par la première protection KT1. Pour des raisons pratique, cet instant est toutefois temporisé (différé par un délai transitoire) de manière à éviter toute perturbation au niveaux des dispositifs récepteurs. Après ce délai transitoire, les dispositifs utilisateurs qui ne possèdent pas de licence régulière LIR ne seront plus en mesure d'accéder au contenu CT et devront présenter aussitôt une nouvelle requête 33 au serveur 10 pour pouvoir obtenir la première protection KT1 intégrée à la licence régulière LIR.

Dans la pratique, ce processus se déroule très rapidement, typiquement dans un intervalle de temps inférieur à une crypto-période; sachant qu'une crypto-période représente l'intervalle de temps durant lequel contenu peut être déchiffré au moyen du même mot de contrôle CW. Lorsque ce mot de contrôle change, le dispositif utilisateur doit obtenir par avance le nouveau mot de contrôle pour pouvoir déchiffrer la suite du contenu, désormais chiffré par ce nouveau mot de contrôle. Si le dispositif utilisateur n'est plus en mesure d'obtenir le mot de contrôle parce que celui-ci n'est chiffré que par la première protection KT1, alors ce dispositif enverra une requête 33 au serveur pour obtenir l'accès au contenu. Ce regain de requêtes peut engendrer un nouveau pic de requêtes 33, en particulier un pic de secondes requêtes 33, reçues au serveur de la part de tous les dispositifs utilisateurs qui n'ont pas encore obtenu leur licence régulière malgré l'envoi d'une première requête. Pour pallier ce problème, la présente invention suggère également plusieurs solutions qui seront présentées plus après dans la présente description.

Différents modes de réalisation peuvent être adoptés par le serveur pour générer la ou les licences singulières durant le mode de distribution singulier. Selon un mode de réalisation, la licence singulière LIS est une licence qui, de la part du serveur, requière sensiblement moins de ressources de calcul pour être générée comparativement à la licence régulière LIR. Par ce biais, il devient possible, dans un même intervalle de temps, de produire bien plus de licences singulières que de licences régulières. La simplification pourrait être obtenue au niveau de l'algorithme qui génère les licences LIS, par exemple en utilisant un algorithme raccourci requérant moins d'opérations cryptographiques. Une telle licence singulière simplifiée pourrait donc néanmoins être spécifique à chaque dispositif utilisateur.

Selon un autre mode réalisation, la licence singulière est une licence partagée par une pluralité de dispositifs utilisateurs. Dans une forme de base, cette licence pourrait être partagée par tous les dispositifs utilisateurs qui sont en attente de recevoir une licence régulière. Ainsi, la production d'une seule licence singulière suffirait à servir tous les dispositifs utilisateurs qui ne peuvent se voir attribuer immédiatement une licence régulière.

Dans une forme plus élaborée, la licence singulière LIS est une licence qui est partagée par un groupe particulier de dispositifs utilisateurs, à savoir par une partie de l'ensemble des dispositifs utilisateurs en attente de recevoir leur licence régulière. Ainsi, la licence singulière pourrait se décliner en plusieurs licences singulières pouvant être notées LISa, LISb, LISc, etc... et être respectivement générées pour des groupes a, b, c, de dispositifs utilisateurs. Les licences singulières LISa, LISb, LISc sont toutes différentes les unes des autres et chacune d'elles comprend une seconde protection KT2 spécifique. A titre d'exemple, la licence LISa comprend une seconde protection KT2a qui est différente de KT2b comprise dans LISb et de KT2c comprise dans LISc.

De manière optionnelle, on pourrait également prévoir que l'accès à la seconde protection KT2 (notation générique incluant, le cas échéant, KT2a, KT2b etc...) pourrait être sécurisé par une protection commune Kc connue d'une partie au moins des dispositifs utilisateurs. Pour ce faire, il serait possible de chiffrer KT2 au moyen d'une protection commune Kc (clé partagée) ou de chiffrer la licence LIS par Kc, voire de chiffrer KT2 et LIS par Kc. Dans le cas où le serveur générerait plusieurs licences singulières différentes LISa, LISb, LISc, chacune d'elle pourrait être protégée par une protection commune Kc spécifique et différente (Kca, Kcb, Kcc). Avantageusement, l'adjonction d'une protection commune Kc pour sécuriser l'accès aux licences singulières permet de relever le niveau de sécurité du système de distribution des licences. La protection commune Kc et ou les protections spécifiques Kca, Kcb, Kcc,... pourraient être transmises aux dispositifs utilisateurs concernés par un ou plusieurs EMM.

Dans une configuration spécialement applicable au standard DVB, ou à tout standard dans lequel le serveur peut adresser en tout temps des messages à un dispositif utilisateur particulier D_{IDx}, il est suggéré que chaque requête 33 soit identifiée par un identifiant spécifique (R1, R2, R3, etc... comme illustré sur la figure 1). Cet identifiant de requête est associé et propre à chaque dispositif utilisateur 30 (par ex. respectivement D_{ID1}, D_{ID2}, D_{ID3}, etc...) de manière à ce qu'il soit possible d'identifier, sans ambiguïté, de quel dispositif utilisateur provient chaque requête 33. A partir d'une telle configuration, le serveur pourrait, dans le mode de distribution singulier, effectuer en outre les étapes consistants à mémoriser l'identifiant (R1, R2, R3) de chaque requête 33 émanant d'un dispositif utilisateur 30 (D_{ID1}, D_{ID2}, D_{ID3}). Puis, si la cadence instantanée Dinst est inférieure à la cadence maximale Dmax, générer une licence régulière LIR pour chaque requête dont l'identifiant de requête a été mémorisé et la transmettre au dispositif utilisateur 30 associé à cet identifiant de requête. On notera que l'identifiant de requête (R1, R2, R3) pourrait également être l'identifiant (ID1, ID2, ID3) associé à chaque dispositif utilisateur. En variante, on pourrait bien entendu mémoriser l'identifiant de chaque dispositif (ID1, ID2, ID3) ayant fait parvenir une requête 33 au serveur 10.

Par l'un quelconque de ces moyens, le serveur pourrait alors tenir un registre contenant toutes les demandes de licences régulières et connaître pour chacune de ces demandes l'identité du dispositif utilisateur qui l'a émise ou du moins l'adresse électronique ou le moyen qui permet d'atteindre ce dispositif pour lui transmettre sa licence régulière. La transmission de cette dernière pourra être entreprise dès que les ressources de calcul du serveur le permettront. Avantageusement, ce mode de réalisation réserve intégralement la gestion des licences régulières au serveur, de sorte que les dispositifs utilisateurs ne soient pas obligés de présenter une seconde requête s'ils n'ont pas pu être servis par le serveur à la suite de leur première requête. Dès qu'une licence régulière a été transmise au dispositif concerné, le registre recensant les requêtes en attente d'être traitées peut être aussitôt mis à jour par serveur. Ce dernier peut ainsi dénombrer en tout temps le nombre de licences régulières qu'il doit encore générer. De préférence, les requêtes sont traitées dans leur ordre d'arrivée au serveur. Cependant, il pourrait être également possible d'associer un degré de priorité à chaque requête et de les traiter également en fonction de leur priorité.

Dans une configuration plus spécialement applicable au standard IPTV, ou à tout standard dans lequel le serveur ne peut pas adresser en tout temps des messages à un dispositif utilisateur particulier D_{IDx}, il est suggéré que le serveur comprenne en outre un moyen de comptabilisation CPT du nombre instantané N_{R} de licences régulières LIR en attente d'être générées. A chaque fois qu'une nouvelle requête parvient au serveur, le moyen de comptabilisation CPT est incrémenté d'une unité et, à l'inverse, est décrémenté d'une unité lorsqu'une licence régulière a été générée et/ou a été transmise au dispositif concerné.

Dans ce mode de réalisation, le mode de distribution singulier comprendrait en outre les étapes visant à déterminer si la cadence instantanée Dinst est inférieure à la cadence maximale Dmax et, dans l'affirmative ou de préférence tant que Dinst reste inférieure à Dmax, à déterminer si ledit nombre N_{R} de licences régulières est supérieur à zéro et, tant que N_{R} est supérieur à zéro, à calculer et diffuser, via un message d'information adressé à une partie au moins des dispositifs utilisateurs, un taux d'admission T_{A} représentatif de la proportion de requêtes admissibles par le serveur par rapport au nombre N_{R} de licences régulières totalisé par le moyen de comptabilisation CPT.

A titre d'exemple académique, si le nombre instantané de licences régulières à générer vaut N_{R}=200, que la cadence instantanée Dinst = 90% de la cadence maximale Dmax et que cette dernière permet de traiter N=60 LIR par unité de temps, alors le taux d'admission du serveur vaudra T_{A}= N(Dmax-Dinst)/N_{R} = 60(100%-90%)/200 = 3%. Ainsi, les ressources de calcul du serveur permettraient, à cet instant, de traiter N_{R}*T_{A} licences régulières, à savoir dans cet exemple: 200*3% = 6 licences régulières parmi les 200 requêtes en attente.

On remarquera au passage que Dmax-Dinst correspond au taux de disponibilité du serveur ou en d'autres termes à la cadence résiduelle disponible. De plus, si les cadences Dmax et Dinst étaient directement exprimées en nombre de licences par unité de temps (dans cet exemple on aurait donc: Dmax=N=60; Dinst=N*90%=54), alors le taux d'admission du serveur vaudrait T_{A} = (Dmax-Dinst)/N_{R} = (60-54)/200 = 3%. Dans tous les cas, le taux d'admission T_{A} est calculé en déterminant le nombre N_{D} de licences régulières que les ressources de calcul sont à même de générer à l'instant T présent (compte tenu du taux de disponibilité instantané du serveur), puis en déterminant le quotient de ce nombre N_{D} de licences que le serveur est disposé à calculer par le nombre N_{R} de licences régulières totalisé par le moyen de comptabilisation CPT.

De préférence, le serveur basculera dans le mode de distribution régulier dès que le nombre N_{R} de licences régulières dénombré par les moyens de comptabilisation CPT est inférieur au nombre maximum de licences que le serveur peut générer par unité de temps. Ainsi dans le cas où Dmax est exprimé en nombre de licences par unité de temps (par ex. par crypto-période), alors le serveur serait autorisé à quitter le mode de distribution singulier dès que N_{R} <Dmax. De préférence encore, le retour au mode de distribution régulier est temporisé (c'est-à-dire retardé) et ne s'opère qu'après un délai transitoire qui permet aux derniers dispositifs utilisateurs d'acquérir leur licence régulière et de la mettre en oeuvre pour pouvoir déchiffrer le contenu protégé par la première protection. Ce délai transitoire évite toute perturbation (black screen) du côté du récepteur.

La diffusion du taux d'admission T_{A} via le message d'information peut, selon le standard DVB, se faire par le biais d'un message de type ECM qui est lisible par tous les dispositifs utilisateurs (ou au moins une partie des dispositifs utilisateurs, en particulier ceux qui sont en attente de recevoir leur licence régulière) ou, selon un standard de type IPTV, par le biais d'un message équivalent qui est diffusé en même temps que le contenu protégé.

A la réception du message d'information, chaque dispositif utilisateur (ou du moins chaque dispositif en attente d'une licence régulière) peut alors entreprendre les étapes circulaires suivantes:
- vérifier s'il est en possession d'une licence singulière LIS (ou à l'inverse s'il est en attente de recevoir une licence régulière LIR), dans l'affirmative:
- générer un nombre aléatoire RND, par exemple entre 0 et 1,
- vérifier si le nombre aléatoire généré RND est inférieur ou égal au taux d'admission T_{A}, dans l'affirmative renvoyer la requête au serveur, dans la négative attendre la réception d'un nouveau message d'information.

Optionnellement, il serait possible, avant de générer le nombre aléatoire, d'ajouter une étape visant à vérifier que le taux d'admission T_{A} transmis par le message d'information est bien inférieur à 1. En effet, si ce taux est supérieur ou égale à 1, la requête peut être immédiatement renvoyée au serveur car dans ce cas ses ressources de calcul permettent d'absorber la totalité des requêtes en attente.

A titre d'exemple et en référence au taux d'admission T_{A}=3% cité précédemment, si le nombre aléatoire RND n'excède pas 0.03 (à savoir les 3% correspondant au taux T_{A}), alors le dispositif utilisateur est autorisé à renvoyer sa requête au serveur. Statistiquement, le nombre de dispositifs qui seront autorisés à renvoyer une requête au serveur sera équivalent au nombre de licences régulières que le serveur est à même de générer.

La détermination et la transmission du taux d'admission T_{A} aux dispositifs utilisateurs permet avantageusement de réguler le nombre de secondes requêtes renvoyées par ces dispositifs au serveur. Cela permet de communiquer aux dispositifs concernés la probabilité qu'ils ont de recevoir une licence régulière en réponse à une seconde requête et, par là même, d'éviter un nouveau pic de requêtes au serveur.

En variante, on pourrait imaginer d'autres mécanismes permettant de contrôler le flux de secondes requêtes renvoyées par les dispositifs utilisateurs qui n'ont pas encore reçu leur licence régulière suite à leur première requête. Parmi ces mécanismes, il est suggéré de générer par le serveur et durant le mode de distribution singulier, un certain nombre N_{S} de licences singulières (LISa, LISb, LISc, etc..) toutes différentes les unes des autres. Comme déjà mentionné précédemment, chacune de ces licences singulières est destinée à être transmise à une partie distincte des dispositifs utilisateurs et comprend une seconde protection (KT2a, KT2b, KT2c, etc...) spécifique qui, précisément, la rend différente des autres licences singulières. Néanmoins, chaque seconde protection garantit l'accès au contenu multimédia CT car cet accès reste protégé de manière indépendante par chaque protection quelle qu'elle soit.

Le but visé par la génération de plusieurs licences singulières différentes est d'octroyer chacune d'elles à un groupe formé d'un certain nombre de dispositifs utilisateurs. Ce nombre avoisinera (de préférence n'excèdera pas) le nombre de requêtes que le serveur pourra traiter lorsque tous les utilisateurs de ce groupe renverront chacun une seconde requête au serveur (quasi simultanément). Pour ce faire, le nombre N_{S} de licences singulières différentes (LISa, LISb, LISc) est déterminé par le serveur en fonction de ladite cadence maximale Dmax à laquelle les ressources de calcul peuvent déterminer une licence régulière LIR.

En reprenant les valeurs du modèle académique précédent, à un instant T donné le serveur doit par exemple générer N_{R}=200 licences régulières LIR. Ses ressources de calcul ne lui permettent de générer que N=60 LIR par unité de temps conformément à sa cadence maximale Dmax. Par conséquent, le serveur va créer une pluralité de licences singulières, chacune pouvant être attribuée à un lot de N dispositifs utilisateurs. En l'occurrence, le nombre de licences singulières LIS que le serveur va créer sera équivalent à la valeur entière de N_{R}/N, à savoir dans cet exemple 3 licences singulières.

En effet, dès l'instant T, le serveur est à même de créer N=60 LIR durant une première période P1 s'étendant de l'instant T à l'instant T+1. A l'instant T+1, il devra encore générer N_{R}-N LIR, à savoir 140 Licences régulières. A chaque période P, il peut générer N=60 LIR conformément à son débit maximum Dmax. A l'instant T+2, à savoir au terme de la seconde période P2, il lui faudra encore générer N_{R}-2N LIR, à savoir 80 Licences régulières. Au terme de la 3^{e} période P3, il lui restera N_{R}-3N LIR, à savoir 20 Licences régulières à générer. Durant la 4^{e} et dernière période P4, il pourra générer les 20 dernières licences régulières. Ainsi, si la première période suffit pour générer 60 LIR (Dmax), il faudra donc générer 3 licences singulières LISa, LISb, LISc qui seront distribuées aux 140 dispositifs utilisateurs restants parmi les 200 en attente de recevoir une licence régulière. De préférence, les deux premières licences singulières LISa, LISb seront attribuées chacune à N=60 dispositifs utilisateurs conformément à la cadence maximale Dmax. Cependant, on pourrait également choisir une répartition plus régulière où, selon cet exemple, chaque licence singulière (LISa, LISb, LISc) serait attribuée à (N_{R}-N)/3 dispositifs utilisateurs, à savoir à 46 ou 47 dispositifs utilisateurs. Typiquement, la période P mentionnée ici peut correspondre à une crypto-période.

A chaque fois qu'un lot de N licences régulières a été généré au terme d'une période P pour un groupe de dispositifs utilisateurs à qui une certaine licence singulière avait été distribuée, le serveur peut retirer la seconde protection KT2 correspondant à cette licence singulière, à savoir l'une des secondes protections KT2a, KT2b, KT2c, etc.... Une fois cette seconde protection retirée, les dispositifs utilisateurs de ce groupe ne seront plus à même d'accéder au contenu protégé et renverront donc une seconde requête au serveur pour éviter typiquement l'apparition d'un écran noir sur l'équipement de l'utilisateur. Comme le nombre de dispositifs utilisateurs de ce groupe avait été contrôlé par le serveur, ce dernier sera donc capable de faire face à cet afflux de secondes requêtes et d'y répondre instantanément en transmettant les licences régulières correspondantes. Ainsi, le mode de distribution singulier SM comprendra en outre, dans ce mode de réalisation, une étape visant à supprimer successivement chacune desdites secondes protection (KT2) spécifiques dès que les licences régulières LIR correspondantes ont été générées par le serveur.

En variante, on pourrait prévoir que chaque seconde protection permet, au moyen d'une fonction de dérivation, d'obtenir la seconde protection d'ordre (ou d'indice) inférieur, mais ne permet pas d'obtenir la seconde protection d'ordre supérieur. Par exemple, en ayant KT2b, on peut par dérivation obtenir KT2a, mais on ne peut pas obtenir KT2c. Ainsi, le groupe de dispositifs utilisateurs qui est en possession de la licence singulière LISc, laquelle comprend KT2c, pourra par dérivation accéder au contenu CT, que ce dernier soit protégé par KT2c, KT2b ou KT2a. Ainsi, en choisissant la seconde protection KT2a, KT2b, KT2c appropriée, le serveur pourra contrôler le flux de secondes requêtes.

Par exemple, si le serveur choisi de protéger l'accès au contenu CT à l'aide de KT2a, alors tous les dispositifs utilisateurs pourront avoir accès à ce contenu. En effet, ceux qui disposent de LISa={KT2a} ont directement KT2a ; ceux qui disposent de LISb={KT2b} pourront obtenir KT2a par la fonction de dérivation et de même ceux qui disposent de LISc={KT2c} pourront obtenir par cette fonction KT2a, soit directement, soit en obtenant d'abord KT2b puis KT2a.

Si le serveur choisi ensuite à la période P suivante de protéger l'accès au contenu CT à l'aide de KT2b, alors seuls les dispositifs ayant LISb et LISc pourront déchiffrer ce contenu. En effet, les dispositifs utilisateurs ayant reçu LISa={KT2a} seront incapables d'obtenir la seconde protection KT2b. De ce fait, les dispositifs utilisateurs du premier groupe (groupe a) ayant reçu une LISa vont chacun envoyer une seconde requête 33 au serveur pour pouvoir déchiffrer le contenu. Dans l'intervalle, le serveur aura pris soin de générer les licences régulières LIR de chacun des utilisateurs de ce premier groupe lesquels pourront chacun obtenir leur licence régulière en réponse à leur seconde requête. Le serveur pourra ensuite générer les LIR du second groupe (groupe b) puis, à la période P suivante, modifier la protection du contenu de sorte que son accès soit protégé par la seconde protection KT2c. Dès lors, ce sont les dispositifs utilisateurs du second groupe (groupe b) qui seront incapables d'accéder au contenu à l'aide de leur seconde protection KTb (les dispositifs du premier groupe ne sont plus inquiétés vu qu'ils ont tous reçu leur licence régulière). Les dispositifs utilisateurs du second groupe vont alors, à leur tour, chacun envoyer une seconde requête au serveur pour éviter toute perturbation (black screen). Ainsi de suite, on constate que le serveur pourra contrôler, par échelonnement, les requêtes 33 (en particulier les secondes requêtes) provenant des dispositifs utilisateurs et éviter ainsi l'apparition de pics de requêtes que le serveur ne peut absorber.

Dans une variante moins élaborée qui ne ferait pas appel à une fonction de dérivation, il pourrait être envisagé d'inclure plusieurs secondes protections dans une partie des licences singulières de façon à ce que les dispositifs utilisateurs puissent obtenir directement la seconde protection qui convient pour accéder au contenu. Conformément à l'exemple précédent, on aurait alors LISa={KT2a}, LISb={KT2a, KT2b} et LISc={KT2a, KT2b, KT2c}.

Pour couvrir tous les modes de réalisation dans lesquels plusieurs licences singulières LIS sont générées en vue de contrôler le flux des secondes requêtes, on mentionnera que le mode de distribution singulier SM comprend en outre une étape visant à sélectionner successivement (parmi un ensemble de secondes protections mises en oeuvre KT2a, KT2b, KT2c, etc...) par quelle(s) seconde(s) protection(s) KT2 l'accès au contenu multimédia CT doit être protégé. De cette sélection, le serveur peut donc protéger l'accès au contenu CT au moyen d'un ensemble variable de plusieurs secondes protections indépendantes (KT2a, KT2b, KT2c, etc...) ou au moyen d'une seule seconde protection KT2 variable (KT2a ou KT2b ou KT2c, etc...). Cette sélection est répétée périodiquement, par exemple au terme de chaque période P durant laquelle le serveur a pu générer un lot de N licences régulières, jusqu'à ce que toutes les licences régulières LIR ont été générées en réponse à toutes les requêtes 33 reçues par le serveur 10. En d'autres termes, cette répétition s'effectue jusqu'à ce que les NR licences régulières en attente d'être reçues (comptabilisées par exemple par les moyens de comptabilisation CPT) ont été générées.

Selon un autre mode de réalisation possible, le mode de distribution singulier SM pourrait être légèrement modifié pour que l'accès au contenu multimédia CT soit protégé non plus par une seule première protection KT1 mais par au moins une première protection KT1. Ainsi, ce contenu pourrait être protégé simultanément par plusieurs premières protections KT1, toutes différentes les unes des autres, par exemple par KT1, KT1', KT1", où chaque première protection serait allouée à un certain groupe d'utilisateurs. Dans tous les cas, chaque licence régulière LIR comprendrait au moins une desdites premières protections KT1, KT1', KT1" dont l'accès serait, comme précédemment, également sécurisé par une protection spécifique (ou personnelle) Kp.

Avantageusement, la présente méthode permet donc également d'anticiper l'afflux de secondes requêtes en les contrôlant tant au niveau de leur nombre qu'au niveau de l'instant où elles parviendront au serveur.

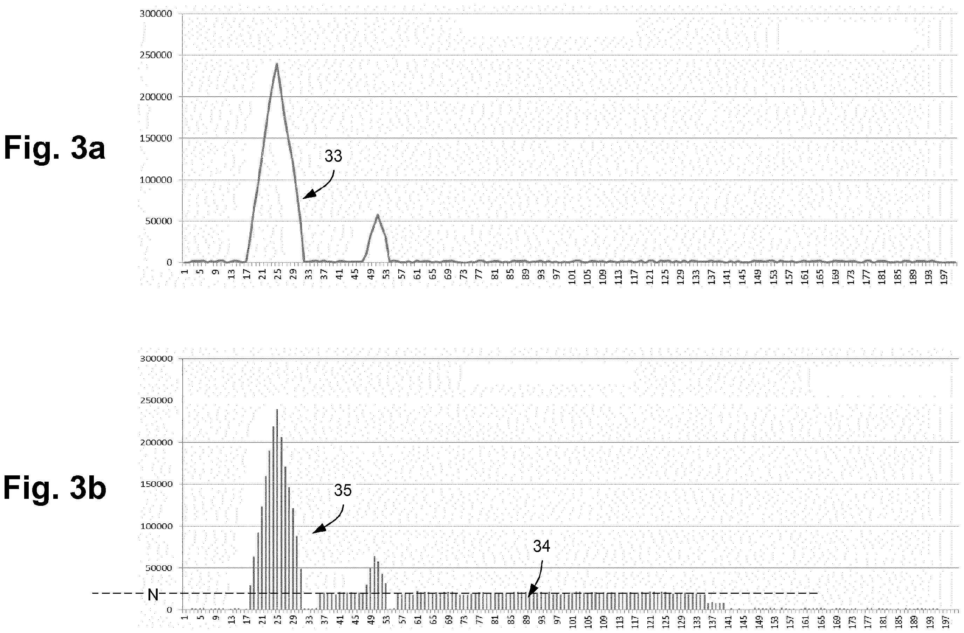

La figure 3a donne un exemple d'une représentation graphique du nombre de requêtes 33 reçues par le serveur en fonction du temps. Cette figure illustre deux pics de demandes, chacun pouvant coïncider à peu de chose près au début d'un événement multimédia attendu par un grand nombre d'utilisateurs, par exemple un match de football ou la diffusion d'un film ou d'un autre événement particulièrement apprécié du publique.

En correspondance à ce premier graphique, la figure 3b illustre la quantité de licences régulières LIR et singulières LIS qui doivent être délivrées par le serveur pour répondre aux requêtes illustrées dans la figure 3a. Sur cette figure 3b, est indiqué le nombre N de licences régulières LIR que le serveur peut délivrer par unité de temps en utilisant au maximum toutes ses ressources de calcul 11. Ce nombre N représente donc le seuil de licences régulières qui peut être générées par unité de temps (Dmax). Il est représenté par un trait interrompu horizontal placé en ordonnée à la hauteur de quelques 20'000 LIR. En dessous de ce seuil est illustrée la proportion de licences régulières LIR produites par le serveur pour faire face à toutes les requêtes représentées sur la figure 3a. Au dessus de ce seuil est illustrée la proportion de requêtes qui recevront une licence singulière LIS temporaire par manque de ressources de calcul du serveur.

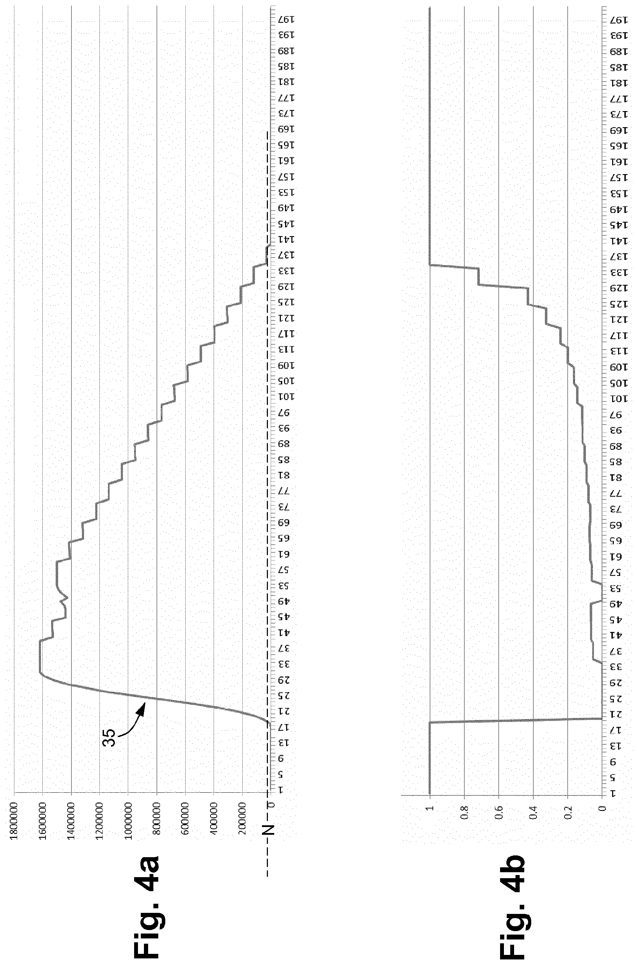

En correspondance avec les figures 3a et 3b, la figure 4a donne, en fonction de la même base de temps, une illustration graphique du nombre de licences singulières LIS délivrées par le serveur et non encore remplacée par des licences régulières. Sur la figure 4a, le seuil des N licences régulières que peut produire le serveur par unité de temps est également représenté en ordonnée par un trait interrompu. Durant tout l'intervalle de temps où la courbe de la figure 4a se trouve au dessus du seuil N, les dispositifs utilisateurs peuvent recourir à la seconde protection KT2 pour accéder au contenu CT protégé. En dehors de cet intervalle de temps, ce contenu n'est accessible qu'au moyen de la première protection KT1 se trouvant dans la licence régulière LIR. A noter que lorsque la courbe de cette figure redescend au dessous du seuil N, un délai transitoire (non illustré) permet encore de garantir l'accès au contenu CT au moyen de la licence singulière LIS. Le retour temporisé (par ce délai transitoire) à un contenu CT qui n'est protégé que par la licence régulière LIR permet d'assurer que tous les dispositifs utilisateurs ont eu le temps de recevoir la licence régulière LIR et sont à même de l'exploiter (évitant ainsi toute perturbation temporaire de type black screen aux récepteurs).

La figure 4b donne, en correspondance au graphique de la figure 4a, la probabilité qu'ont les dispositifs utilisateurs d'obtenir une licence régulière LIR en réponse à leur requête durant un intervalle de temps englobant les pics illustrés à la figure 3a. Dès l'apparition du premier pic, on remarque en correspondance sur la figure 4b que les ressources de calcul du serveur sont très rapidement saturées et, que de ce fait, la probabilité d'obtenir une licence régulière pour la grande majeur partie des requêtes est nulle durant le premier et le second pic. Après le second pic, cette probabilité augmente rapidement une fois que la majorité des dispositifs utilisateurs ont obtenu leur licence régulière.

La présente invention concerne également un dispositif de distribution pour la mise en oeuvre du procédé selon l'une quelconque des variantes décrites précédemment. En référence aux figures 1 et 2, ce dispositif comprend:
- des ressources de calcul 11 permettant, à une cadence instantanée (Dinst) proportionnelle aux ressources de calcul utilisées et jusqu'à concurrence d'une cadence maximale Dmax définie par une utilisation maximale des ressources 11 (cette cadence Dmax pouvant être une valeur déterminée par le matériel du système ou une valeur paramétrable, par exemple par un administrateur), de générer des licences régulières LIR en réponse aux requêtes 33 provenant des dispositifs utilisateurs 30,
- une unité de sécurité 12 pour générer ladite première protection KT1,
- une unité logique 13 pour vérifier si la cadence instantanée Dinst est inférieure à la cadence maximale Dmax (ce qui revient à vérifier le taux d'utilisation des ressources de calcul 11 ou, de manière complémentaire, à vérifier le taux de disponibilité de ces ressources),
- un générateur de licences 14 qui, dans le cas d'une issue positive de l'unité logique 13, génère, en réponse à chacune des requêtes 33 (R1, R2, R3, etc...), des licences régulières LIR (LIR1, LIR2, LIR3, etc...) qui chacune comprend la première protection KT1,
- une unité de protection 15 permettant de sécuriser l'accès à la première protection KT1 par une protection spécifique Kp (Kp1, Kp2, etc..) qui est associée à chaque dispositif utilisateur 30 (D_{ID1}, D_{ID2}, etc...) et qui est différente pour chacun des dispositifs utilisateurs,
- une unité de transmission 16 permettant de transmettre, aux dispositifs utilisateurs 30, les licences régulières LIR en réponse à chacune des requêtes 33,
- une unité de sélection 17 qui, dans le cas d'une issue négative de l'unité logique 13, permet de basculer dans un mode de distribution singulier SM afin de:
- protéger l'accès au service multimédia CT par au moins une seconde protection KT2 supplémentaire (à savoir en plus de la première protection) indépendante de la première protection KT1,
- générer au moyen du générateur de licences 14 au moins une licence singulière LIS comprenant la seconde protection KT2 et
- transmettre, à l'aide de l'unité de transmission 16, la licence singulière LIS à au moins une partie des dispositifs utilisateurs 30.

L'unité logique 13 est également utilisée, de manière répétitive, dans le mode de distribution singulier SM pour basculer dans le mode régulier RM et ne protéger l'accès audit service multimédia CT qu'à l'aide de la première protection KT1 si la cadence instantanée Dinst est à nouveau inférieure à la cadence maximale Dmax. Ce retour au mode initial peut s'opérer au moyen de l'unité de sélection 17, en activant à nouveau la routine mettant en oeuvre les étapes du mode de distribution régulier. De préférence, ce retour au mode de distribution régulier est temporisé (et donc engendre un délai transitoire) pour éviter toute perturbation au dispositifs récepteurs, comme déjà expliqué précédemment.

Le dispositif de distribution est de préférence intégré au serveur 10 du système de distribution par lequel les services multimédias sont rendus accessibles aux dispositifs utilisateurs. C'est pourquoi les ressources de calcul 11 se référant au serveur 10, peuvent plus particulièrement être celles du dispositif de distribution.

L'unité de sécurité peut typiquement être constituée d'un générateur de clés cryptographiques. Cette unité peut être utilisée pour générer la première protection KT1, la seconde protection KT2 (ou, le cas échéant, les secondes protections KT2a, KT2b, ect...), les clés spécifiques Kp (Kp1, Kp2, etc...) associées aux dispositifs utilisateurs et, si nécessaire, la ou les clés communes Kc qui peuvent être utilisées pour protéger l'accès à la licence singulière LIS (le cas échéant aux licences singulières LISa, LISb, etc...).

L'unité de protection 15 peut être une unité cryptographique capable, au moyen d'un algorithme de chiffrement, d'une donnée à chiffrer et d'une clé d'encryption, de verrouiller l'accès à cette donnée en la chiffrant à l'aide de la clé utilisée comme paramètre de l'algorithme. Cette unité de protection 15 peut donc être utilisée aussi bien pour protéger l'accès à la première protection KT1 que pour protéger l'accès à la seconde protection KT2 (ou aux secondes protections KT2a, KT2b, etc...).

Si nécessaire, la cadence instantanée Dinst peut être déterminée par une unité de mesure 18 qui quantifie le taux d'utilisation des ressources de calcul 11.

Le dispositif de distribution peut également comprendre, dans une mémoire, un registre pour stocker, au moins temporairement, les requêtes ou les données y relatives qu'il a reçues et pour lesquelles il n'a pas encore été en mesure de répondre par manque de ressources de calcul disponibles. De préférence, un tel registre comprendra, pour chacune de ces requêtes, un enregistrement incluant un identifiant ID permettant d'identifier le dispositif utilisateur 30 émetteur de la requête et/ou l'adresse électronique ou le moyen permettant d'atteindre ce dispositif. D'autres champs, tels que la clé personnelle Kp associée à chaque dispositif, une clé commune Kc partagée entre un certain nombre de dispositifs utilisateurs d'un même groupe, un identifiant de requête, un niveau de priorité, un instant de réception ou un délai de traitement pourraient également faire partie de l'enregistrement.

Selon les variantes, le dispositif de distribution peut également comprendre: un moyen de comptabilisation CPT du nombre instantané N_{R} de licences régulières LIR en attente d'être générées, plusieurs unités de calcul dont l'une notamment pour déterminer un taux d'admission (T_{A}) représentatif de la proportion de requêtes admissibles par le serveur, un générateur de nombres aléatoires (RND) ainsi qu'une unité de traitement pour traiter toutes les autres données utiles à la méthode de distribution des licences et un processeur central pour coordonner toutes les unités du dispositif de distribution.

## Revendications

1. Méthode de distribution de licences multimédias (LIR, LIS) par un serveur (10) à une pluralité de dispositifs utilisateurs (30) au sein d'un système de distribution d'un service multimédia (CT) dont l'accès est protégé par une première protection (KT1) correspondant à une première clé de transmission générée par le serveur, conformément à un mode de distribution régulier (RM) mis en œuvre par le serveur (10),
ledit serveur étant doté de ressources de calcul (11) permettant, à une cadence instantanée (Dinst) proportionnelle aux ressources de calcul utilisées et jusqu'à concurrence d'une cadence maximale (Dmax) définie par une utilisation maximale desdites ressources (11), de générer des licences régulières (LIR) en réponse à des requêtes (33) émanant desdits dispositifs utilisateurs (30),
chaque licence régulière (LIR) comprenant ladite première protection (KT1) dont l'accès est sécurisé par une protection spécifique (Kp) correspondant à une clé personnelle et associée à chaque dispositif utilisateur (30) et différente pour chaque dispositif utilisateur,
ladite méthode comprenant les étapes circulaires suivantes:
- vérifier si ladite cadence instantanée (Dinst) est inférieure à la cadence maximale (Dmax) et,
- dans l'affirmative générer puis transmettre aux dispositif utilisateurs (30) lesdites licences régulières (LIR) en réponse à chacune desdites requêtes (33),
- dans la négative basculer le serveur (10) dans un mode de distribution singulier (SM) apte à distribuer autant de licences multimédias (LIR, LIS) que nécessaire et consistant à:
- protéger l'accès audit service multimédia (CT) par au moins une seconde protection (KT2) supplémentaire, correspondant à une seconde clé de transmission, indépendante de ladite première protection (KT1),
- générer au serveur (10) au moins une licence singulière (LIS) comprenant ladite seconde protection (KT2), ladite licence singulière (LIS) étant une licence singulière personnelle simplifiée, auquel cas la génération de ladite licence singulière (LIS) est réalisée au moyen d'un algorithme simplifié requérant un nombre réduit d'opérations cryptographiques, ou une licence singulière partagée par une pluralité de dispositifs utilisateurs (30),
- transmettre ladite licence singulière (LIS) à au moins une partie des dispositifs utilisateurs (30), de sorte que si ladite licence singulière (LIS) est une licence singulière partagée par une pluralité de dispositifs utilisateurs, ladite licence singulière (LIS) est partagée par tous les dispositifs utilisateurs (30) qui sont en attente de recevoir une licence régulière ou par un groupe particulier de dispositifs utilisateurs (30), c'est-à-dire par une partie de l'ensemble des dispositifs utilisateurs (30) en attente de recevoir leur licence régulière,
- vérifier, de manière répétitive, si la cadence instantanée (Dinst) est inférieure à la cadence maximale (Dmax) et, dans l'affirmative, basculer du mode singulier (SM) au mode régulier (RM) pour n'autoriser l'accès audit service multimédia (CT) qu'à l'aide d'une licence régulière (LIR),

2. Méthode selon l'une des revendications précédentes, **caractérisée en ce que** l'accès à ladite seconde protection (KT2) est sécurisé par une protection commune (Kc), connue d'une partie au moins desdits dispositifs utilisateurs (30).

3. Méthode selon la revendication 1, **caractérisée en ce que** ladite protection spécifique (Kp) est soit une clé privée, soit une clé publique d'un dispositif utilisateur (30) dans une configuration de chiffrement symétrique, respectivement asymétrique, entre ledit serveur (10) et ledit dispositif utilisateur (30).

4. Méthode selon l'une des revendications précédentes, **caractérisée en ce que** chaque requête (33) est identifiée par un identifiant spécifique (ID) qui est associé à chaque dispositif utilisateur (30), qui est différent pour chaque dispositif utilisateur (30) et qui permet au serveur (10) d'adresser en tout temps des messages audit dispositif utilisateur (30), et **en ce que** ledit serveur (10) effectue en outre les étapes suivantes dans le mode de distribution singulier (SM):
- mémoriser l'identifiant (ID) de chaque requête (33) émanant d'un dispositif utilisateur (30), et
- si la cadence instantanée (Dinst) est inférieure à la cadence maximale (Dmax), générer une licence régulière (LIR) pour chaque requête (33) dont l'identifiant (ID) a été mémorisé et la transmettre au dispositif utilisateur (30) qui est associé audit identifiant (ID).

5. Méthode selon l'une des revendications précédentes, **caractérisée en ce que** la licence régulière (LIR) est transmise au dispositif utilisateur (30) dans un premier message d'administration des droits (EMM1), la licence singulière (LIS) est transmise dans un second message d'administration des droits (EMM2) et **en ce que** ledit service multimédia (CT) est un contenu multimédia chiffré par un mot de contrôle (CW) et **en ce que**, dans le mode de distribution régulier (RM), ledit mot de contrôle (CW) est chiffré par ladite première protection (KT1) pour former un premier message de contrôle (ECM1), et dans le mode de distribution singulier (SM) ledit mot de contrôle (CW) est en outre chiffré par ladite seconde protection (KT2) pour former un second message de contrôle (ECM2).

6. Méthode selon l'une des revendications 1 à 3, **caractérisée en ce que**:
ledit serveur (10) comprend en outre un moyen de comptabilisation (CPT) d'un nombre (NR) de licences régulières (LIR) requises en attente d'être générées,
ledit mode de distribution singulier (SM) comprend en outre les étapes visant à:
- déterminer si la cadence instantanée (Dinst) est inférieure à la cadence maximale (Dmax), dans l'affirmative:
- tant que ledit nombre (NR) de licences régulières (LIR) est supérieur à zéro: calculer et diffuser, via un message d'information adressé à une partie au moins des dispositifs utilisateurs (30), un taux d'admission (TA) représentatif de la proportion de requêtes (33) admissibles par le serveur (10) par rapport au nombre (NR) de licences régulières (LIR) totalisé par ledit moyen de comptabilisation (CPT),
et **en ce que** chaque dispositif utilisateur (30), à la réception dudit message d'information, effectue les étapes circulaires suivantes:
- vérifier s'il est en possession d'une licence régulière (LIR), dans la négative:
- générer un nombre aléatoire (RND), puis vérifier si le nombre aléatoire généré est inférieur ou égal audit taux d'admission (TA), dans l'affirmative renvoyer ladite requête (33) au serveur (10), sinon attendre la réception d'un nouveau message d'information.

7. Méthode selon la revendication 6, **caractérisée en ce que** ledit taux d'admission (TA) est calculé par les étapes suivantes:
- déterminer un nombre (No) de licences régulières (LIR) que lesdites ressources de calcul (11) sont à même de générer à l'instant présent,
- ledit taux d'admission (TA) étant égale au quotient dudit nombre (No) ainsi déterminé par le nombre (NR) de licences régulières (LIR) totalisé par le moyen de comptabilisation (CPT).

8. Méthode selon l'une des revendications 1 à 3, **caractérisée en ce qu'**un certain nombre (Ns) de licences singulières (LIS) différentes sont générées par le serveur (10) durant ledit mode de distribution singulier (SM), chacune d'elles étant destinée à être transmise à une partie spécifique desdits dispositifs utilisateurs (30) et comprend au moins une seconde protection (KT2) spécifique qui la rend différente des autres licences singulières (LIS) et qui garanti l'accès audit service multimédia (CT), ledit nombre (Ns) de licence singulières (LIS) étant déterminé par le serveur (10) en fonction de ladite cadence maximale (Dmax) à laquelle les ressources de calcul (11) peuvent déterminer une licence régulière (LIR), et **en ce que** ledit mode de distribution singulier (SM) comprend en outre une étape visant à sélectionner, parmi une pluralité de secondes protections (KT2), au moins une seconde protection (KT2) pour protéger l'accès au contenu multimédia (CT), et à répéter périodiquement cette sélection jusqu'à ce que toutes les licences régulières (LIR) ont été générées en réponse à toutes les requêtes (33) reçues par le serveur (10).

9. Dispositif de distribution de licences multimédias (LIR, LIS) à une pluralité de dispositifs utilisateurs (30) au sein d'un système de distribution d'un service multimédia (CT) dont l'accès est protégé par une première protection (KT1) correspondant à une première clé de transmission générée par le serveur, conformément à un mode de distribution régulier (RM), comprenant:
- des ressources de calcul (11) permettant, à une cadence instantanée (Dinst) proportionnelle aux ressources de calcul utilisées et jusqu'à concurrence d'une cadence maximale (Dmax) définie par une utilisation maximale desdites ressources (11), de générer des licences régulières (LIR) en réponse à des requêtes (33) provenant desdits dispositifs utilisateurs (30),
- une unité de sécurité (12) pour générer ladite première protection (KT1),
- une unité logique (13) pour vérifier si ladite cadence instantanée (Dinst) est inférieure à la cadence maximale (Dmax),
- un générateur de licences (14) qui, dans le cas d'une réponse positive issue de ladite unité logique (13), génère, en réponse à chacune desdites requêtes (33), des licences régulières (LIR) intégrant chacune ladite première protection (KT1),
- une unité cryptographique (15) pour sécuriser l'accès à ladite première protection (KT1) par une protection spécifique (Kp) correspondant à une clé personnelle et associée à chaque dispositif utilisateur (30) et différente pour chaque dispositif utilisateur,
- une unité de transmission (16) permettant de transmettre auxdits dispositifs utilisateurs (30) les licences régulières (LIR) en réponse à chacune desdites requêtes (33),
- une unité de sélection (17) qui, dans le cas d'une réponse négative issue de ladite unité logique (13), permet de basculer dans un mode de distribution singulier (SM) apte à distribuer autant de licences multimédias (LIR, LIS) que nécessaire et consistant à
- protéger l'accès audit service multimédia (CT) par au moins une seconde protection (KT2) supplémentaire, , correspondant à une seconde clé de transmission, indépendante de ladite première protection (KT1),
- générer au moyen dudit générateur de licences (14) au moins une licence singulière (LIS) comprenant ladite seconde protection (KT2), ladite licence singulière (LIS) étant une licence singulière personnelle simplifiée, auquel cas la génération de ladite licence singulière (LIS) est réalisée au moyen d'un algorithme simplifié requérant un nombre réduit d'opérations cryptographiques, ou une licence singulière partagée par une pluralité de dispositifs utilisateurs (30),
et
- transmettre, à l'aide de ladite unité de transmission (16), ladite licence singulière (LIS) à au moins une partie des dispositifs utilisateurs (30), de sorte que si ladite licence singulière (LIS) est une licence singulière partagée par une pluralité de dispositifs utilisateurs, ladite licence singulière (LIS) est partagée par tous les dispositifs utilisateurs (30) qui sont en attente de recevoir une licence régulière ou par un groupe particulier de dispositifs utilisateurs (30), c'est-à-dire par une partie de l'ensemble des dispositifs utilisateurs (30) en attente de recevoir leur licence régulière,
ladite unité logique (13) étant également utilisée, de manière répétitive, dans ledit mode de distribution singulier (SM) pour retourner dans un mode régulier (RM) initial au moyen de l'unité de sélection (17) et ne protéger l'accès audit service multimédia (CT) qu'à l'aide de ladite première protection (KT1) si ladite cadence instantanée (Dinst) est à nouveau inférieure à la cadence maximale (Dmax).

## Patentansprüche

1. Verfahren zur Verteilung von Multimedia-Lizenzen (LIR, LIS) durch einen Server (10) an eine Vielzahl von Benutzervorrichtungen (30) innerhalb eines Verteilungssystems eines Multimedia-Dienstes (CT), dessen Zugang durch einen ersten Schutz (KT1) geschützt ist, der einem ersten, von dem Server generierten Übertragungsschlüssel entspricht, gemäß einem regulären Verteilermodus (RM), der von dem Server (10) umgesetzt wird,
wobei der Server mit Rechenressourcen (11) versehen ist, die es erlauben, in einem momentanen Takt (Dinst), der proportional zu den verwendeten Rechenressourcen ist und bis zur Höhe eines maximalen Takts (Dmax), der durch eine maximale Verwendung der Ressourcen (11) definiert ist, reguläre Lizenzen (LIR) als Antwort auf Anforderungen (33) zu generieren, die von den Benutzervorrichtungen (30) ausgehen,
wobei jede reguläre Lizenz (LIR) den ersten Schutz (KT1) umfasst, dessen Zugang durch einen speziellen Schutz (Kp) gesichert ist, der einem persönlichen Schlüssel entspricht und jeder Benutzervorrichtung (30) zugeordnet und für jede Benutzervorrichtung unterschiedlich ist,
wobei das Verfahren die folgenden zirkulären Schritte umfasst:
- Überprüfen, ob der momentane Takt (Dinst) niedriger als der maximale Takt (Dmax) ist und,
- wenn ja, Generieren und dann Übertragen, an die Benutzervorrichtungen (30), der regulären Lizenzen (LIR) als Antwort auf jede der Anforderungen (33),
- wenn nein, Umschalten des Servers (10) in einen singulären Verteilermodus (SM), der imstande ist, so viele Multimedia-Lizenzen (LIR, LIS) wie notwendig zu verteilen und darin besteht:
- Schützen des Zugangs zu dem Multimedia-Dienst (CT) durch mindestens einen zusätzlichen zweiten Schutz (KT2), der einem zweiten Übertragungsschlüssel entspricht, der von dem ersten Schutz (KT1) unabhängig ist,
- Generieren, im Server (10), mindestens einer singulären Lizenz (LIS), die den zweiten Schutz (KT2) umfasst, wobei die singuläre Lizenz (LIS) eine vereinfachte persönliche singuläre Lizenz ist, wobei in diesem Fall die Generierung der singulären Lizenz (LIS) mittels eines vereinfachten Algorithmus durchgeführt wird, der eine reduzierte Anzahl kryptografischer Operationen benötigt, oder eine von einer Vielzahl von Benutzervorrichtungen (30) geteilte singuläre Lizenz,
- Übertragen, der singulären Lizenz (LIS), an mindestens einen Teil der Benutzervorrichtungen (30), so dass, wenn die singuläre Lizenz (LIS) eine von einer Vielzahl von Benutzervorrichtungen geteilte singuläre Lizenz ist, die singuläre Lizenz (LIS) von allen Benutzervorrichtungen (30) geteilt wird, die den Empfang einer regulären Lizenz erwarten, oder von einer besonderen Gruppe von Benutzervorrichtungen (30), das heißt, von einem Teil der Gesamtheit der Benutzervorrichtungen (30), die den Empfang ihrer regulären Lizenz erwarten,
- Überprüfen, wiederholend, ob der momentane Takt (Dinst) niedriger als der maximale Takt (Dmax) ist, und wenn ja, Umschalten aus dem singulären Modus (SM) in den regulären Modus (RM), um den Zugang zu dem Multimedia-Dienst (CT) nur mit Hilfe einer regulären Lizenz (LIR) zu gestatten.

2. Verfahren nach einem der vorangehenden Ansprüche, **dadurch gekennzeichnet, dass** der Zugang zum zweiten Schutz (KT2) durch einen gemeinsamen Schutz (Kc) gesichert ist, der mindestens einem Teil der Benutzervorrichtungen (30) bekannt ist.

3. Verfahren nach Anspruch 1, **dadurch gekennzeichnet, dass** der spezielle Schutz (Kp) entweder ein privater Schlüssel oder ein öffentlicher Schlüssel einer Benutzervorrichtung (30) in einer symmetrischen beziehungsweise asymmetrischen Verschlüsselungskonfiguration zwischen dem Server (10) und der Benutzervorrichtung (30) ist.

4. Verfahren nach einem der vorangehenden Ansprüche, **dadurch gekennzeichnet, dass** jede Anforderung (33) durch ein spezielles Kennwort (ID) identifiziert ist, das jeder Benutzervorrichtung (30) zugeordnet ist, das für jede Benutzervorrichtung (30) unterschiedlich ist und das es dem Server (10) erlaubt, jederzeit Nachrichten an die Benutzervorrichtung (30) zu schicken, und dass der Server (10) ferner die folgenden Schritte im singulären Verteilermodus (SM) durchführt:
- Speichern des Kennworts (ID) jeder Anforderung (33), die von einer Benutzervorrichtung (30) ausgeht, und
- wenn der momentane Takt (Dinst) niedriger als der maximale Takt (Dmax) ist, Generieren einer regulären Lizenz (LIR) für jede Anforderung (33), deren Kennwort (ID) gespeichert wurde, und deren Übertragung an die Benutzervorrichtung (30), die dem Kennwort (ID) zugeordnet ist.

5. Verfahren nach einem der vorangehenden Ansprüche, **dadurch gekennzeichnet, dass** die reguläre Lizenz (LIR) an die Benutzervorrichtung (30) in einer ersten Rechteverwaltungsnachricht (EMM1) übertragen wird, die singuläre Lizenz (LIS) in einer zweiten Rechteverwaltungsnachricht (EMM2) übertragen wird und dass der Multimedia-Dienst (CT) ein durch ein Kontrollwort (CW) verschlüsselter Multimediainhalt ist und dass im regulären Verteilermodus (RM) das Kontrollwort (CW) durch den ersten Schutz (KT1) verschlüsselt wird, um eine erste Kontrollnachricht (ECM1) zu bilden, und im singulären Verteilermodus (SM) das Kontrollwort (CW) ferner durch den zweiten Schutz (KT2) verschlüsselt wird, um eine zweite Kontrollnachricht (ECM2) zu bilden.

6. Verfahren nach einem der Ansprüche 1 bis 3, **dadurch gekennzeichnet, dass**:
der Server (10) ferner ein Verbuchungsmittel (CPT) einer Anzahl (NR) angeforderter regulärer Lizenzen (LIR) in Generationserwartung umfasst,
wobei der singuläre Verteilermodus (SM) ferner die Schritte umfasst, die darauf abzielen:
- zu bestimmen, ob der momentane Takt (Dinst) niedriger als der maximale Takt (Dmax) ist, wenn ja:
- wenn die Anzahl (NR) regulärer Lizenzen (LIR) größer als Null ist: Berechnen und Verbreiten, über eine an mindestens einen Teil der Benutzervorrichtungen (30) geschickte Informationsnachricht, einer Zulassungsquote (TA), die für den Anteil der durch den Server (10) zulässigen Anforderungen (33) in Bezug auf die von dem Verbuchungsmittel (CPT) zusammengezählte Anzahl (NR) regulärer Lizenzen (LIR) repräsentativ ist,
und dass jede Benutzervorrichtung (30), bei Empfang der Informationsnachricht, die folgenden zirkulären Schritte durchführt:
- Überprüfen, ob sie im Besitz einer regulären Lizenz (LIR) ist, wenn nein:
- Generieren einer zufälligen Anzahl (RND), dann Überprüfen, ob die generierte zufällige Anzahl kleiner oder gleich der Zulassungsquote (TA) ist, wenn ja, Zurückschicken der Anforderung (33) an den Server (10), anderenfalls Warten auf den Empfang einer neuen Informationsnachricht.

7. Verfahren nach Anspruch 6, **dadurch gekennzeichnet, dass** die Zulassungsquote (TA) anhand der folgenden Schritte berechnet wird:
- Bestimmen einer Anzahl (No) regulärer Lizenzen (LIR), die die Rechenressourcen (11) im vorliegenden Augenblick zu generieren imstande sind,
- wobei die Zulassungsquote (TA) gleich dem Quotienten der derart bestimmten Anzahl (No) durch die Anzahl (NR) von dem Verbuchungsmittel (CPT) zusammengezählter regulärer Lizenzen (LIR) ist.

8. Verfahren nach einem der Ansprüche 1 bis 3, **dadurch gekennzeichnet, dass** eine bestimmte Anzahl (Ns) unterschiedlicher singulärer Lizenzen (LIS) von dem Server (10) während des singulären Verteilermodus (SM) generiert wird, wobei jede von ihnen bestimmt ist, an einen speziellen Teil der Benutzervorrichtungen (30) übertragen zu werden und mindestens einen speziellen zweiten Schutz (KT2) umfasst, der sie von den anderen singulären Lizenzen (LIS) unterschiedlich macht und der den Zugang zu dem Multimedia-Dienst (CT) garantiert, wobei die Anzahl (Ns) singulärer Lizenzen (LIS) von dem Server (10) in Abhängigkeit vom maximalen Takt (Dmax) bestimmt wird, mit dem die Rechenressourcen (11) eine reguläre Lizenz (LIR) bestimmen können, und dass der singuläre Verteilermodus (SM) ferner einen Schritt umfasst, der darauf abzielt, aus einer Vielzahl zweiter Schutze (KT2) mindestens einen zweiten Schutz (KT2) auszuwählen, um den Zugang zum Multimediainhalt (CT) zu schützen, und diese Auswahl periodisch zu wiederholen, bis alle reguläre Lizenzen (LIR) als Antwort auf alle von dem Server (10) empfangene Anforderungen (33) generiert sind.

9. Vorrichtung zur Verteilung von Multimedia-Lizenzen (LIR, LIS) an eine Vielzahl von Benutzervorrichtungen (30) innerhalb eines Verteilungssystems eines Multimedia-Dienstes (CT), dessen Zugang durch einen ersten Schutz (KT1) geschützt ist, der einem ersten, von dem Server generierten Übertragungsschlüssel entspricht, gemäß einem regulären Verteilermodus (RM), umfassend:
- Rechenressourcen (11), die es erlauben, in einem momentanen Takt (Dinst), der proportional zu den verwendeten Rechenressourcen ist und bis zur Höhe eines maximalen Takts (Dmax), der durch eine maximale Verwendung der Ressourcen (11) definiert ist, reguläre Lizenzen (LIR) als Antwort auf Anforderungen (33) zu generieren, die von den Benutzervorrichtungen (30) ausgehen,
- eine Sicherheitseinheit (12), um den ersten Schutz (KT1) zu generieren,
- eine logische Einheit (13), um zu überprüfen, ob der momentane Takt (Dinst) niedriger als der maximale Takt (Dmax) ist,
- einen Lizenzgenerator (14), der im Fall einer positiven Antwort, die von der logischen Einheit (13) ausgegeben wird, als Antwort auf jede der Anforderungen (33) reguläre Lizenzen (LIR) generiert, die jeweils den ersten Schutz (KT1) integrieren,
- eine Verschlüsselungseinheit (15), um den Zugang zum ersten Schutz (KT1) durch einen speziellen Schutz (Kp) zu sichern, der einem persönlichen Schlüssel entspricht und jeder Benutzervorrichtung (30) zugeordnet und für jede Benutzervorrichtung unterschiedlich ist,
- eine Übertragungseinheit (16), die erlaubt, an die Benutzervorrichtungen (30) die regulären Lizenzen (LIR) als Antwort auf jede der Anforderungen (33) zu übertragen,
- eine Auswahleinheit (17), die im Fall einer negativen Antwort, die von der logischen Einheit (13) ausgegeben wird, erlaubt, in einen singulären Verteilermodus (SM) umzuschalten, der imstande ist, so viele Multimedia-Lizenzen (LIR, LIS) wie notwendig zu verteilen und darin besteht:
- Schützen des Zugangs zu dem Multimedia-Dienst (CT) durch mindestens einen zusätzlichen zweiten Schutz (KT2), der einem zweiten Übertragungsschlüssel entspricht, der von dem ersten Schutz (KT1) unabhängig ist,
- Generieren, mittels des Lizenzgenerators (14), mindestens einer singulären Lizenz (LIS), die den zweiten Schutz (KT2) umfasst, wobei die singuläre Lizenz (LIS) eine vereinfachte persönliche singuläre Lizenz ist, wobei in diesem Fall die Generierung der singulären Lizenz (LIS) mittels eines vereinfachten Algorithmus durchgeführt wird, der eine reduzierte Anzahl kryptografischer Operationen benötigt, oder eine von einer Vielzahl von Benutzervorrichtungen (30) geteilte singuläre Lizenz,
und
- Übertragen, mit Hilfe der Übertragungseinheit (16), der singulären Lizenz (LIS) an mindestens einen Teil der Benutzervorrichtungen (30), so dass, wenn die singuläre Lizenz (LIS) eine von einer Vielzahl von Benutzervorrichtungen geteilte singuläre Lizenz ist, die singuläre Lizenz (LIS) von allen Benutzervorrichtungen (30) geteilt wird, die den Empfang einer regulären Lizenz erwarten, oder von einer besonderen Gruppe von Benutzervorrichtungen (30), das heißt, von einem Teil der Gesamtheit der Benutzervorrichtungen (30), die den Empfang ihrer regulären Lizenz erwarten,
wobei die logische Einheit (13) ebenfalls wiederholend genutzt wird, im singulären Verteilermodus (SM), um mittels der Auswahleinheit (17) in einen regulären Ausgangsmodus (RM) zurückzukehren und den Zugang zu dem Multimedia-Dienst (CT) nur mit Hilfe des ersten Schutzes (KT1) zu schützen, wenn der momentane Takt (Dinst) erneut niedriger als der maximale Takt (Dmax) ist.

## Claims

1. A method for distributing multimedia licenses (LIR, LIS) by a server (10) to a plurality of user devices (30) in a distribution system of a multimedia service (CT), access to which is protected by a first protection (KT1) corresponding to a first transmission key generated by the server, according to a distribution regular mode (RM) implemented by the server (10),
said server being equipped with computing resources (11) allowing, at an instantaneous pace (Dinst) proportional to the computing resources used and up to a limit of a maximum pace (Dmax) defined by a maximum use of said resources (11), generating regular licenses (LIR) in response to requests (33) coming from said user devices (30),
each regular license (LIR) comprising said first protection (KT1), access to which is secured by a specific protection (Kp) corresponding to a personal key and associated with each user device (30), and different for each user device,
said method comprising the following circular steps:
- verifying whether said instantaneous pace (Dinst) is less than the maximum pace (Dmax) and,
- if so, generating then transmiting to the user device (30) said regular licenses (LIR) in response to each of said requests (33),
- if not, switching the server (10) into a singular mode of distribution (SM) capable of distributing as many multimedia licenses (LIR, LIS) as necessary and consisting of:
- protecting access to said multimedia service (CT) by at least one second, additional protection (KT2), corresponding to a second transmission key, independent of said first protection (KT1),
- generating in the server (10) at least one singular license (LIS) comprising said second protection (KT2) said singular license (LIS) being a simplified personal singular license, in which case the generation of said singular license (LIS) is accomplished by means of a simplified algorithm requiring a reduced number of cryptographic operations, or a singular license shared by a plurality of user devices (30),
- transmitting said singular license (LIS) to at least a part of the user devices (30), so that if said singular license (LIS) is a singular license shared by a plurality of user devices, said singular license (LIS) is shared by all the user devices (30) which are pending receipt of a regular license or by a particular group of user devices (30), i.e. by a part of the set of user devices (30) pending receipt of their regular license,
- verifying repetitively whether the instantaneous pace (Dinst) is less than the maximum pace (Dmax) and if so, switching from the singular mode (SM) to the regular mode (RM) to allow access to said multimedia service (CT) only by means of a regular license (LIR).

2. The method according to one of the preceding claims, **characterized in that** access to said second protection (KT2) is secured by a common protection (Kc), known to one part at least of said user devices (30).

3. The method according to claim 1, **characterized in that** said specific protection (Kp) is either a private key, or a public key of a user device (30) in a symmetric, respectively asymmetric cryptographic scheme, between said server (10) and said user device (30).

4. The method according to one of the preceding claims, **characterized in that** each request (33) is identified by a specific identifier (ID) which is associated with each user device (30), which is different for each user device (30) and which allows the server (10) to address, at any time, messages to said user device (30), and **in that** said server (10) further carries out the following steps in the singular distribution (SM) mode:
- storing the identifier (ID) of each request (33) from a user device (30), and
- if the instantaneous pace (Dinst) is less than the maximum pace (Dmax), generating a regular license (LIR) for each request (33) of which the identifier (ID) has been stored and transmiting it to the user device (30) which is associated with said identifier (ID).

5. The method according to one of the preceding claims, **characterized in that** the regular license (LIR) is transmitted to the user device (30) in a first rights administration message (EMM1), the singular license (LIS) is transmitted in a second rights administration message (EMM2) and **in that** said multimedia service (CT) is multimedia content encrypted by a control word (CW) and **in that**, in the distribution regular mode (RM), said control word (CW) is encrypted by said first protection (KT1) to form a first control message (ECM1), and in the distribution singular mode (SM) said control word (CW) is further encrypted by said second protection (KT2) to form a second control message (ECM2).

6. The method according to one of claims 1 to 3, **characterized in that**:
said server (10) further comprises an accounting means (CPT) of a number (NR) of requested regular licenses (LIR) pending generation,
said distribution singular mode (SM) further comprises the steps intended to:
- determine whether the instantaneous pace (Dinst) is less than the maximum pace (Dmax), and if so:
- as long as said number (NR) of regular licenses (LIR) is greater than zero: calculate and broadcast, via an information message addressed to a part at least of the user devices (30), an admission rate (TA) representative of the proportion of requests (33) admissible by the server (10) relative to the number (NR) of regular licenses (LIR) totaled by said accounting means (CPT),
and **in that** each user device (30), upon receiving said information message, carries out the following circular steps:
- verifying whether it is in possession of a regular license (LIR), and if not:
- generating a random number (RND), then verifying if the random number generated is less than or equal to said admission rate (TA), and if so returning said request (33) to the server (10), if not awaiting reception of a new information message.

7. The method according to claim 6, **characterized in that** said admission rate (TA) is calculated by the following steps:
- determining a number (No) of regular licenses (LIR) which said computing resources (11) are able to generate at the present instant,
- said admission rate (TA) being equal to the ratio of said number (No) thus determined in relation to the number (NR) of regular license (LIR) totaled by the accounting means (CPT) .

8. The method according to one of claims 1 to 3, **characterized in that** a certain number (Ns) of different singular licenses (LIS) are generated by the server (10) during said distribution singular mode (SM), each of them being intended to be transmitted to a certain part of said user devices (30) and comprises at least one second specific protection (KT2) which makes it different from the other singular licenses (LIS) and which guarantees access to said multimedia services (CT), said number (Ns) of singular licenses (LIS) being determined by the server (10) depending on said maximum pace (Dmax) at which the computing resources (11) can determine a regular license (LIR), and **in that** said distribution singular mode (SM) further comprises step aimed at selecting, among a plurality of second protections (KT2), at least one second protection (KT2) to protect access to the multimedia content (CT), and periodically repeating this selection until all the regular licenses (LIR) have been generated in response to all the requests (33) received by the server (10).

9. A device for distributing multimedia licenses (LIR, LIS) to a plurality of user devices (30) in a distribution system of a multimedia service (CT) access to which is protected by a first protection (KT1) corresponding to a first transmission key generated by the server, according to a distribution regular mode (RM) comprising:
- computing resources (11) allowing, at an instantaneous pace (Dinst) proportional to the computing resources used and up to a limit of a maximum pace (Dmax) defined by maximum use of said resources (11), generating regular licenses (LIR) in response to requests (33) from said user devices (30),
- a security unit (12) for generating said first protection (KT1),
- a logic unit (13) for verifying whether said instantaneous pace (Dinst) is less than the maximum pace (Dmax),
- a license generator (14) which, in the case of a positive response from said logic unit (13) generates, in response to each of said requests (33), regular licenses (LIR) each integrating said first protection (KT1),
- a cryptographic unit (15) for securing access to said first protection (KT1) by a specific protection (Kp) corresponding to a personal key and associated with each user device (30) and different for each user device,
- a transmission unit (16) allowing regular licenses (LIR) to be transmitted to said user devices (30) in response to each of said requests (33),
- a selection unit (17) which, in the case of a negative response issued from said logic unit (13) allows switching into a distribution singular mode (SM) able to distribute as many multimedia licenses (LIR, LIS) as necessary and consisting of:
- protecting access to said multimedia service (CT) by at least one additional second protection (KT2), corresponding to a second transmission key, independent of said first protection (KT1),
- generating by means of said license generator (14) at least one singular license (LIS) comprising said second protection (KT2), said singular license (LIS) being a simplified personal singular license, in which case the generation of said singular license (LIS) is accomplished by means of a simplified algorithm requiring a reduced number of cryptographic operations, or a singular license shared by a plurality of user devices (30),
and
- transmitting, by means of said transmission unit (16), said singular license (LIS) to at least a part of the user devices (30), so that if said singular license (LIS) is a singular license shared by a plurality of user devices, said singular license (LIS) is shared by all the user devices (30) which are expecting to receive a regular license or by a particular group of user devices (30), i.e. by a part of the set of user devices (30) expecting to receive their regular license,
said logic unit (13) also being used, repetitively, in said distribution singular mode (SM) to return into an initial regular mode (RM) by means of the selection unit (17) and to protect access to said multimedia service (CT) only by means of said first protection (KT1) if said instantaneous pace (Dinst) is once again lower than the maximum pace (Dmax).
